(19) Europäisches Patentamt / European Patent Office / Office européen des brevets

(11) **EP 4 468 508 A1**

(12) **EUROPEAN PATENT APPLICATION**
published in accordance with Art. 153(4) EPC

(43) Date of publication:
**27.11.2024 Bulletin 2024/48**

(21) Application number: **22939044.8**

(22) Date of filing: **28.04.2022**

(51) International Patent Classification (IPC):
*H01M 50/538* (2021.01)   *H01M 50/55* (2021.01)
*H01M 10/0525* (2010.01)   *H01M 10/04* (2006.01)

(52) Cooperative Patent Classification (CPC):
**H01M 50/538;** H01M 10/04; H01M 10/0525;
H01M 50/55; Y02E 60/10; Y02P 70/50

(86) International application number:
**PCT/CN2022/089733**

(87) International publication number:
**WO 2023/206192 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **CHAI, Zhisheng**
  **Ningde, Fujian 352100 (CN)**
• **XU, Hu**
  **Ningde, Fujian 352100 (CN)**
• **GU, Hui**
  **Ningde, Fujian 352100 (CN)**

(74) Representative: **Ran, Handong
Maucher Jenkins
Seventh Floor Offices
Artillery House
11-19 Artillery Row
London SW1P 1RT (GB)**

(54) **BATTERY CELL, BATTERY, ELECTRIC DEVICE, ELECTRODE ASSEMBLY AND MANUFACTURING METHOD THEREFOR**

(57)    A battery cell, a battery, an electric device, an electrode assembly and a manufacturing method therefor. The electrode assembly comprises: a body portion (100) comprising a positive plate (10A), a negative plate (10B) and a separator (10C), wherein the positive plate (10A), the separator (10C) and the negative plate (10B) are wound into a wound structure in a winding direction (r); a plurality of positive tabs (20), which are respectively connected to at least two positive plate winding layers and arranged at intervals in the winding direction (r); and a plurality of negative tabs (30), which are respectively connected to at least two negative plate winding layers and arranged at intervals in the winding direction (r). The plurality of positive tabs (20) and the plurality of negative tabs (30) are located at the same side end of the body portion (100) in a direction perpendicular to the winding direction (r), and the lengths of the positive tabs (20) respectively connected to the positive plate winding layers and of the negative tabs (30) respectively connected to the negative plate winding layers in the winding direction (r) all increase in the winding direction (r).

FIG. 6

EP 4 468 508 A1

## Description

### TECHNICAL FIELD

This disclosure relates to the field of battery technologies, and in particular, to a battery cell, a battery, an electric device, and an electrode assembly and a manufacturing method thereof.

### BACKGROUND

Rechargeable battery cells, also known as secondary battery cells, are battery cells that can be charged after discharge to activate active materials for continuous use. Rechargeable battery cells are widely used in electronic devices, such as mobile phones, laptop computers, electric scooters, electric vehicles, electric airplanes, electric ships, electric toy cars, electric toy ships, electric toy airplanes, and electric tools.

The electrode assembly, as a key component of a battery cell, has some battery performance or safety issues related to tabs during the manufacturing process.

### SUMMARY

According to one aspect of this disclosure, an electrode assembly is provided, including:

a body portion, including a positive electrode plate, a negative electrode plate, and a separator disposed between the positive electrode plate and the negative electrode plate, where the positive electrode plate, the separator, and the negative electrode plate are wound into a winding structure along a winding direction;
multiple positive electrode tabs separately connected to at least two positive electrode plate winding layers in the winding structure and spaced apart along the winding direction; and
multiple negative electrode tabs separately connected to at least two negative electrode plate winding layers in the winding structure and spaced apart along the winding direction;
where the multiple positive electrode tabs and the multiple negative electrode tabs are located at a same end portion of the body portion in a direction perpendicular to the winding direction; a length of the positive electrode tabs connected to the respective positive electrode plate winding layers in the winding direction increases along the winding direction; and a length of the negative electrode tabs connected to the respective negative electrode plate winding layers in the winding direction increases along the winding direction.

The multiple positive electrode tabs connected to the positive electrode plate and the multiple negative electrode tabs connected to the negative electrode plate are disposed on a same side of the winding structure, so that the current collecting plate corresponding to the positive electrode tabs and the current collecting plate corresponding to the negative electrode tabs can collect currents separately and output currents from the same side. Compared to the structure in which tabs extend from two ends of the winding structure in the related technology, this embodiment can shorten the path for electrons to reach the pole through the electrode plate, so that the tabs do not require the housing to conduct currents, eliminating the adverse effect of the housing resistance on the internal resistance of the battery and the adverse effect of the heat generated by the housing on the heat dissipation inside the battery. This reduces the internal resistance of the battery, improves heat dissipation of the battery, and enhances the power and fast-charging capability of the battery.

The lengths of the positive electrode tabs and negative electrode tabs connected to the respective electrode plate winding layers are made increase along the winding direction, so that the positive electrode tabs after winding of the electrode plate can overlap inwardly and approach each other according to curvature of the corresponding electrode plate winding layers during bending and flattening, and the negative electrode tabs after winding of the electrode plate can overlap inwardly and approach each other according to curvature of the corresponding electrode plate winding layer during bending and flattening, thus forming the more neatly arranged positive electrode tab group and negative electrode tab group. This facilitates separation of the positive and negative electrodes and subsequent welding of the tabs. In addition, the separated positive electrode tabs and the separated negative electrode tabs are less likely to wrinkle when bent and flattened, thus reducing the risk of tab breakage or short circuits caused by wrinkles inserted into the electrode plate.

In some embodiments, the winding structure is a cylindrical winding structure wound around a winding axis.

Compared to a cylindrical winding structure used by cylindrical batteries in the related technology in which positive electrode tabs and negative electrode tabs respectively extend at two ends, in this embodiment, the positive electrode tabs and the negative electrode tabs are located on the same side of the cylindrical winding structure, which can effectively reduce the internal resistance of the battery and improve the heat dissipation of the battery. In addition, as the circumferences of the electrode plate winding layers of the cylindrical winding structure decrease from outside to inside, the lengths of the tabs corresponding to the layers also decrease, which allows the tabs to be arranged more neatly after flattened toward the center, facilitating separation of the positive and negative electrodes and subsequent welding of the tabs. In addition, the tabs connected to the respective electrode plate winding layers are spaced apart, so that the positive electrode tabs and negative electrode tabs after winding can be separated, reducing the risk of short circuits caused by ineffective separation of the two electrode plate groups with opposite polarities after flattening.

In some embodiments, an angle range of the multiple positive electrode tabs at the end portion of the body portion with respect to the winding axis does not coincide with an angle range of the multiple negative electrode tabs at the end portion of the body portion with respect to the winding axis.

The angle ranges of the multiple positive electrode tabs and multiple negative electrode tabs on the same side of the cylindrical winding structure are designed to not coincide with each other, effectively reducing the risk of short circuits caused by ineffective separation of the two electrode plate groups with opposite polarities after flattening.

In some embodiments, at least one of the multiple positive electrode tabs has at least one first notch on an edge of a side away from the positive electrode plate, and the at least one first notch divides the positive electrode tab into multiple positive electrode tab segments along the winding direction; and/or at least one of the multiple negative electrode tabs has at least one second notch on an edge of a side away from the negative electrode plate, and the at least one second notch divides the negative electrode tab into multiple negative electrode tab segments along the winding direction.

The first notch is provided on the side edge of the positive electrode tab to divide the positive electrode tab into separated multiple positive electrode tab segments, so that the positive electrode tab is less likely to wrinkle when flattened, reducing the risk of tab breakage caused by wrinkles and the risk of short circuits caused by wrinkles inserted into the electrode plates. Similarly, the second notch is provided on the side edge of the negative electrode tab to divide the negative electrode tab into separated multiple negative electrode tab segments, so that the negative electrode tab is less likely to wrinkle when flattened, reducing the risk of tab breakage caused by wrinkles and the risk of short circuits caused by wrinkles inserted into the electrode plates.

In some embodiments, widths of the positive electrode tab segments are the same in the winding direction, and the number of positive electrode tab segments in each positive electrode tab connected to the respective positive electrode plate winding layers increases along the winding direction; and widths of the negative electrode tab segments are the same in the winding direction, and the number of negative electrode tab segments in each negative electrode tab connected to the respective negative electrode plate winding layers increases along the winding direction.

The use of positive electrode tab segments of the same width can reduce the processing difficulty of the positive electrode tabs and results in a neater positive electrode tab group after flattening. Correspondingly, a change in length of the positive electrode tab can be implemented by a change in number of corresponding positive electrode tab segments connected to the respective positive electrode plate winding layers. Similarly, the use of negative electrode tab segments of the same width can reduce the processing difficulty of the negative electrode tabs and results in a neater negative electrode tab group after flattening. Correspondingly, a change in length of the negative electrode tab can be implemented by a change in number of corresponding negative electrode tab segments connected to the respective negative electrode plate winding layers.

In some embodiments, the multiple positive electrode tabs and the multiple negative electrode tabs satisfy at least one of the following:

upstream end positions of the positive electrode tabs connected to the respective positive electrode plate winding layers in the winding direction are all in a same plane;
downstream end positions of the positive electrode tabs connected to the respective positive electrode plate winding layers in the winding direction are all in a same plane;
upstream end positions of the negative electrode tabs connected to the respective negative electrode plate winding layers in the winding direction are all in a same plane; and
downstream end positions of the negative electrode tabs connected to the respective negative electrode plate winding layers in the winding direction are all in a same plane.

The upstream end positions of the positive electrode tabs connected to the respective positive electrode plate winding layers in the winding direction are aligned to a same plane. This helps to ensure the neat alignment of the end portions at that side after the positive electrode tabs at each layer are flattened inwardly, facilitating the separation of the positive and negative electrodes and the subsequent welding of the tabs. Similarly, the downstream end portions of the positive electrode tabs are aligned to a same plane, the upstream end portions of the negative electrode tabs are aligned to a same plane, and the downstream end portions of the negative electrode tabs are aligned to a same plane, which all ensure the neat alignment of the end portions at the corresponding sides, facilitating the separation of the positive and negative electrodes and the subsequent welding of the tabs.

In some embodiments, the upstream end positions and downstream end positions of the positive electrode tabs connected to the respective positive electrode plate winding layers in the winding direction are all in a same plane; and/or the upstream end positions and downstream end positions of the negative electrode tabs connected to the respective negative electrode plate winding layers in the winding direction are all in a same plane.

The upstream end positions and downstream end positions of the positive electrode tabs connected to the respective positive electrode plate winding layers in the winding direction are aligned to a same plane, so that an arched positive electrode tab group can be formed. Such arched positive electrode tab group, after flattened inwardly, maintains a neat alignment at both ends, achieving effective separation from the negative electrode tab group and facilitating its welding to the current collecting plate. Similarly, the upstream end positions and downstream end positions of the negative electrode tabs connected to the respective negative electrode plate winding layers in the winding direction are aligned to a same plane, so that an arched negative electrode tab group can be formed. Such arched negative electrode tab group, after flattened inwardly, maintains a neat alignment at both ends, achieving effective separation from the negative electrode tab group and facilitating its welding to the current collecting plate.

In some embodiments, the upstream end positions of the positive electrode tabs connected to the respective positive electrode plate winding layers in the winding direction and the upstream end positions of the negative electrode tabs connected to the respective negative electrode plate winding layers in the winding direction are all in a same plane; and

the downstream end positions of the positive electrode tabs connected to the respective positive electrode plate winding layers in the winding direction and the downstream end positions of the negative electrode tabs connected to the respective negative electrode plate winding layers in the winding direction are all in a same plane.

The upstream end positions of the positive electrode tabs connected to the respective positive electrode plate winding layers in the winding direction and the downstream end positions of the negative electrode tabs connected to the respective negative electrode plate winding layers are aligned to a same plane, and the downstream end positions of the positive electrode tabs connected to the respective positive electrode plate winding layers in the winding direction and the upstream end positions of the negative electrode tabs connected to the respective negative electrode plate winding layers are aligned to a same plane, so that fan-shaped and mutually symmetrical positive and negative electrode tab groups can be formed. The tab groups of such structure have good consistency, making it easier to maintain consistent welding effects during welding.

In some embodiments, the winding structure is a cylindrical winding structure wound around the winding axis, and the multiple positive electrode tabs and the multiple negative electrode tabs are symmetric with respect to the winding axis or symmetric with respect to a plane across the winding axis.

To improve the consistency when the positive and negative electrode tabs are weld to the respective current collecting plates, the multiple positive electrode tabs and the multiple negative electrode tabs can be made symmetric with respect to the winding axis, or the multiple positive electrode tabs and the multiple negative electrode tabs can be made symmetric with respect to a plane across the winding axis. In this way, the flattened positive electrode tab group and negative electrode tab group can be kept consistent in shape, thus achieving consistent welding effects.

In some embodiments, the electrode assembly further includes: an insulating member, disposed at the end portion of the body portion connected to the multiple positive electrode tabs and the multiple negative electrode tabs and located between the multiple positive electrode tabs and the multiple negative electrode tabs.

In order to more effectively separate the positive electrode tabs and negative electrode tabs located on the same side of the body portion, an insulating member is disposed between the multiple positive electrode tabs and the multiple negative electrode tabs to provide effective separation therebetween, thus reducing the risk of short circuits.

In some embodiments, the insulating member includes an insulating plastic block.

Using an insulating plastic block of a certain size to separate the positive and negative electrode tabs can effectively provide insulation between the positive and negative electrode tabs, thus preventing short circuits. Moreover, such arrangement can provide some support at the end portions of the body portion, so as to withstand certain compression force when the end portions of the battery are subjected to pressure, thus reducing the risk of decarburization at the edge of the electrode plate caused by compression on the body portion.

In some embodiments, the winding structure is a cylindrical winding structure wound around the winding axis, the cylindrical winding structure has a first central hole running through along an axial direction, and the insulating member has a second central hole communicating with the first central hole along the winding axis.

The first central hole and the second central hole are disposed on the insulating member and the cylindrical winding structure, respectively, allowing injection of electrolyte into the battery cell.

In some embodiments, the first central hole and the second central hole are both circular holes, and a diameter D1 of the first central hole is greater than or equal to a diameter D2 of the second central hole.

When a second central hole with a diameter not greater than that of the first central hole is used, the tabs, even if they enter or run through the second central hole from the upper surface of the insulating member after flattened, are less likely to further come into contact with the electrode plate on the radially outer side of the first central hole, thus effectively reducing the risk of short circuits.

In some embodiments, the upstream end positions of the positive electrode tabs connected to the respective positive electrode plate winding layers in the winding direction are all in a first plane, the downstream end positions of the positive electrode tabs connected to the respective positive electrode plate winding layers in the winding direction are all in a second plane, and a range of an included angle θ1 between the first plane and the second plane in a circumferential direction satisfies: θ1 = K1 * (CAL) and θ1 <, 180 degrees; and/or

the upstream end positions of the negative electrode tabs connected to the respective negative electrode plate winding layers in the winding direction are all in a third plane, the downstream end positions of the negative electrode tabs connected to the respective negative electrode plate winding layers in the winding direction are all in a fourth plane, and a range of an included angle θ2 between the third plane and the fourth plane in a circumferential direction satisfies: θ2 = K2 * (CAL) and θ2 ≤ 180 degrees;
where C is capacity of a battery using the electrode assembly, L is total length of the negative electrode plate, K1 is a first proportionality parameter, and K2 is a second proportionality parameter.

The value range of the above included angle is not greater than 180 degrees, and if it exceeds 180 degrees, the negative electrode tabs or positive electrode tabs, after flattened, are likely to come into contact with the tabs of the other polarity, leading to the risk of short circuits. The included angle range corresponding to the tab group, the total length of the negative electrode plate, and the battery capacity are all related to the density of currents flowing through the tabs. When the battery capacity is constant, a longer total length of the negative electrode plate corresponds to fewer charges per unit along the circumferential length. Therefore, under a condition that the allowable current density is met, a tab group with a smaller included angle range can be used. When the total length of the negative electrode plate is constant, a larger battery capacity corresponds to more charges per unit along the circumferential length. To avoid overcurrent heating caused by excessively high density of currents flowing through the tabs, a tab group with a greater included angle range can be used.

In some embodiments, the capacity C of the electrode assembly is in unit of ampere-hours, the total length L of the negative electrode plate is in unit of millimeters, the first proportionality parameter K1 is greater than or equal to

$$12000\frac{mm \cdot kWh}{Ah}$$, and the second proportionality parameter K2 is greater than or equal to $$12000\frac{mm \cdot kWh}{Ah}$$ .

Limiting values of the first proportionality parameter K1 and the second proportionality parameter K2 within suitable ranges allows the temperature of the tabs to be maintained within an allowable range during charging, avoiding overheating that could otherwise affect the performance of the chemical substances in the battery using the electrode assembly.

In some embodiments, the positive electrode plate includes a positive electrode current collector and a positive electrode active substance film layer covering surface of the positive electrode current collector, where the multiple positive electrode tabs are connected to a first side edge of the positive electrode current collector extending along the winding direction, and the positive electrode active substance film layer extends continuously from the surface of the positive electrode current collector to part of surface of the multiple positive electrode tabs; and the negative electrode plate includes a negative electrode current collector, a negative electrode active substance film layer covering surface of the negative electrode current collector, and an insulation film layer covering surface of the negative electrode current collector, where the multiple negative electrode tabs are connected to a second side edge of the negative electrode current collector extending along the winding direction, and the insulation film layer is located in front of the negative electrode active substance film layer in a first direction and extends continuously from the surface of the negative electrode current collector to part of surface of the multiple negative electrode tabs, the first direction being an extension direction of the multiple positive electrode tabs with respect to the positive electrode plate or an extension direction of the multiple negative electrode tabs with respect to the negative electrode plate, and the first direction being perpendicular to the winding direction.

Typically, the edge part of the positive electrode active substance film layer is thinner, and the thinner positive electrode active substance film layer may result in an excessively large gap between the electrode plates, making it difficult to retain the electrolyte. As a result, electrolyte infiltration in some areas is inadequate, and lithium precipitation is more likely to occur. In making positive electrode tabs on the positive electrode plate by die-cutting or the like, the side edge of the positive electrode plate, provided with the positive electrode active substance film layer, can be removed so that the positive electrode active substance film layer extends continuously from the surface of the positive electrode current collector to part of the surface of the positive electrode tabs. Correspondingly, the side edge of the positive electrode plate that is closer to the positive electrode tabs and covered with the positive electrode active substance film layer has a thickness more consistent with that of other positions of the positive electrode plate, making it easier to retain the electrolyte, thus achieving better electrolyte infiltration and reducing the risk of lithium precipitation.

Similarly, the edge part of the insulation film layer is thinner, and the thinner insulation film layer may result in an excessively large gap between the electrode plates, making it difficult to retain the electrolyte. As a result, electrolyte infiltration in some areas is inadequate, and lithium precipitation is more likely to occur. In making negative electrode tabs on the negative electrode plate by die-cutting or the like, the side edge of the negative electrode plate, provided with the insulation film layer, can be removed so that the insulation film layer extends continuously from the surface of the negative electrode current collector to part of the surface of the negative electrode tabs. Correspondingly, the side edge of the negative electrode plate that is closer to the negative electrode tabs and covered with the insulation film layer has a thickness more consistent with that of other positions of the negative electrode plate, making it easier to retain the electrolyte, thus achieving better electrolyte infiltration and reducing the risk of lithium precipitation.

In some embodiments, in the first direction, a foremost end of the extension part of the positive electrode active substance film layer on the multiple positive electrode tabs is located before the first side edge.

For the method of forming the positive electrode tab by die-cutting, the first side edge is equivalent to the positive electrode die-cut edge, and the foremost end of the extension part of the positive electrode active substance film layer on the positive electrode tab is equivalent to the positive electrode coating edge. If the opposite side edge of the first side edge in a direction opposite to the first direction is used as a reference, the height of the positive electrode coating edge is greater than that of the positive electrode die-cut edge. In this case, a part of the positive electrode plate that is outside the positive electrode tabs and lower than the positive electrode coating edge by a certain height can be removed during die-cutting, thus removing a part of the positive electrode plate which corresponds to the thinned part at the edge of the positive electrode active substance film layer. This can alleviate the possible lack of electrolyte in that part, and reduce the risk of local lithium precipitation.

In some embodiments, in the first direction, the first side edge is located behind the second side edge. For the method of forming the positive and negative electrode tabs by die-cutting, the first side edge is equivalent to the positive electrode die-cut edge, and the second side edge is equivalent to the negative electrode die-cut edge.

If the opposite side edge of the first side edge in a direction opposite to the first direction is used as a reference, the height of the positive electrode die-cut edge is less than that of the negative electrode die-cut edge. In this way, during flattening of the negative electrode tabs, if tab wrinkles are inserted towards the electrode plate, the negative electrode plate will first lap with the insulation coating on the negative electrode plate other than the positive electrode active substance film layer on the positive electrode plate, thus reducing the risk of short circuits.

In some embodiments, in the first direction, the foremost end of the extension part of the positive electrode active substance film layer on the multiple positive electrode tabs is located behind the foremost end of the extension part of the insulation film layer on the multiple negative electrode tabs.

If the opposite side edge of the first side edge in a direction opposite to the first direction is used as a reference, the height of the coating edge of the positive electrode active substance film layer on the positive electrode tabs is less than that of the coating edge of the insulation layer on the negative electrode tabs. In this way, when the end portion of the electrode assembly is subjected to compression, the insulation layer is compressed before the positive electrode active substance film layer. This can reduce the risk of short circuits caused by decarburization of the positive electrode active substance film layer when compressed.

In some embodiments, at least one of the multiple positive electrode tabs has at least one first notch on an edge of a side away from the positive electrode plate, the at least one first notch divides the positive electrode tab into multiple positive electrode tab segments along the winding direction, and a root portion of the at least one first notch is located before the separator in the first direction; and

at least one of the multiple negative electrode tabs has at least one second notch on an edge of a side away from the negative electrode plate, the at least one second notch divides the negative electrode tab into multiple negative electrode tab segments along the winding direction, and a root portion of the at least one second notch is located before the separator in the first direction.

If the opposite side edge of the first side edge in a direction opposite to the first direction is used as a reference, the height of the root portion of the first notch and the height of the root portion of the second notch are greater than the height of the separator. The root portion of the first notch and the root portion of the second notch are typically the positions where the tab segments are bent and flattened. Therefore, during welding of the flattened tab segments to the current collecting plates, the tab segments heated during welding can be kept at a distance from the separator, thus reducing the possibility of the separator being scorched during welding, and preventing short circuits caused by the separator being scorched.

In some embodiments, the electrode assembly further includes:

a positive electrode current collecting plate, located on a side of the multiple positive electrode tabs away from the body portion and fixedly connected to the flattened multiple positive electrode tabs by welding; and
a negative electrode current collecting plate, located on a side of the multiple negative electrode tabs away from the body portion and fixedly connected to the flattened multiple negative electrode tabs by welding;
where the multiple positive electrode tabs are bent and flattened at the root portion of the at least one first notch towards the center of an end portion of the body portion, the multiple negative electrode tabs are bent and flattened at the root portion of the at least one second notch towards the center of the end portion of the body portion, a first distance d1 between the root portion of the at least one first notch and the separator in the first direction is greater than or equal to 1.5 times a thickness t1 of the positive electrode current collecting plate, and a second distance d2 between the root portion of the at least one second notch and the separator in the first direction is greater than or equal to 1.5 times a thickness t2 of the negative electrode current collecting plate.

The thickness of the current collecting plate is related to the heat produced during welding, and a thicker current collecting plate produces higher heat during welding. Correspondingly, the first distance between the root portion of the first notch and the separator in the first direction is designed to be greater than 1.5 times the thickness of the positive electrode current collecting plate, and the second distance between the root portion of the second notch and the separator in the first direction is designed to be greater than 1.5 times the thickness of the negative electrode current collecting plate, which can effectively reduce the possibility of the separator being scorched during welding of the current collecting plates, thus preventing short circuits caused by the separator being scorched.

In some embodiments, the root portion of the first notch between adjacent positive electrode tab segments and the root portion of the second notch between adjacent negative electrode tab segments are located in a same plane perpendicular to the first direction.

If the opposite side edge of the first side edge in a direction opposite to the first direction is used as a reference, the root portion of the first notch and the root portion of the second notch are disposed at the same height, so that the flattened positive electrode tabs and negative electrode tabs are in the same plane as much as possible, reducing the occurrence of false welding.

In some embodiments, the electrode assembly further includes:

an insulating member, disposed at the end portion of the body portion connected to the multiple positive electrode tabs and the multiple negative electrode tabs and located between the multiple positive electrode tabs and the multiple negative electrode tabs,

where in the first direction, a distance between the root portion of the at least one first notch and the second side edge is a third distance d3, a distance between the root portion of the at least one second notch and the second side edge is a fourth distance d4, the insulating member is located before the second side edge, a distance between a foremost end of the insulating member along the first direction and the second side edge is a fifth distance d5, and a distance between the foremost end of the extension part of the positive electrode active substance film layer on the multiple positive electrode tabs and the second side edge is a sixth distance d6, where the third distance d3, the fourth distance d4, the fifth distance d5, and the sixth distance d6 satisfy: d5<d6, d3<d5, and d4<d5.

In the first direction, the root portion of the first notch and the root portion of the second notch are positioned closer to the front than the insulating member. In this way, during welding of the current collecting plate, the current collecting plate comes into contact with and is welded to the flattened tabs first, thus effectively preventing the occurrence of false welding. In addition, the foremost end of the insulating member in the first direction is positioned closer to the front than the foremost end of the positive electrode active substance film layer on the positive electrode tabs. In this way, when the electrode assembly is subjected to compression, the insulating member is compressed before the positive electrode active substance film layer. This can reduce the risk of short circuits caused by decarburization of the positive electrode active substance film layer when compressed.

According to one aspect of this disclosure, a battery cell is provided, including the foregoing electrode assembly. The battery cell using the foregoing electrode assembly has better performance.

According to one aspect of this disclosure, a battery is provided, including the foregoing battery cell. The battery using the foregoing battery cell has better performance.

According to one aspect of this disclosure, an electric apparatus is provided, including the foregoing battery. The electric apparatus using the foregoing battery has better performance.

According to one aspect of this disclosure, a manufacturing method of electrode assembly is provided, including:

providing a separator, a positive electrode plate connected with a full positive electrode tab, and a negative electrode plate connected with a full negative electrode tab;

die-cutting the full positive electrode tab into multiple positive electrode tabs spaced apart in a length direction of the positive electrode plate, and die-cutting the full negative electrode tab into multiple negative electrode tabs spaced apart in a length direction of the negative electrode plate;

winding the positive electrode plate, the separator, and the negative electrode plate together to form a body portion of the electrode assembly, and positioning the multiple positive electrode tabs and the multiple negative electrode tabs at a same end portion of the body portion in a direction perpendicular to a winding direction of the body portion; and

bending and flattening the multiple positive electrode tabs and the multiple negative electrode tabs;

where during the die-cutting of the full positive electrode tab and the full negative electrode tab, a length of the positive electrode tabs connected to respective positive electrode plate winding layers of the body portion in the winding direction is increased along the winding direction, and a length of the negative electrode tabs connected to respective negative electrode plate winding layers of the body portion in the winding direction is increased along the winding direction.

The multiple positive electrode tabs formed on the positive electrode plate and the multiple negative electrode tabs formed on the negative electrode plate are disposed on a same side of the winding structure through the die-cutting process, so that the current collecting plate corresponding to the positive electrode tabs and the current collecting plate corresponding to the negative electrode tabs can collect currents separately and output currents from the same side. Compared to the structure in which tabs extend from two ends of the winding structure in the related technology, this embodiment can shorten the path for electrons to reach the pole through the electrode plate, so that the tabs do not require the housing to conduct currents, eliminating the adverse effect of the housing resistance on the internal resistance of the battery and the adverse effect of the heat generated by the housing on the heat dissipation inside the battery. This reduces the internal resistance of the battery, improves heat dissipation of the battery, and enhances the power and fast-charging capability of the battery.

The lengths of the positive electrode tabs and negative electrode tabs connected to the respective electrode plate winding layers are made increase along the winding direction, so that the positive electrode tabs after winding of the electrode plate can overlap inwardly and approach each other according to curvature of the corresponding electrode plate winding layers during bending and flattening, and the negative electrode tabs after winding of the electrode plate can overlap inwardly and approach each other according to curvature of the corresponding electrode plate winding layer during bending and flattening, thus forming the more neatly arranged positive electrode tab group and negative electrode tab group. This facilitates separation of the positive and negative electrodes and subsequent welding of the tabs. In addition, the separated positive electrode tabs and the separated negative electrode tabs are less likely to wrinkle when bent and flattened, thus reducing the risk of tab breakage or short circuits caused by wrinkles inserted into the electrode plate.

In some embodiments, the manufacturing method further includes:
fixing an insulating member between the multiple positive electrode tabs and the multiple negative electrode tabs, so that a tab group formed by the overlapping multiple positive electrode tabs and a tab group formed by the overlapping multiple negative electrode tabs are isolated via the insulating member.

The insulating member is disposed between the multiple positive electrode tabs and multiple negative electrode tabs located on the same side of the body portion, which can effectively separate the positive electrode tabs and negative electrode tabs, further reducing the risk of short circuits.

In some embodiments, the manufacturing method further includes:
welding a positive electrode current collecting plate to the flattened multiple positive electrode tabs, and welding a negative electrode current collecting plate to the flattened multiple negative electrode tabs.

The flattened multiple positive electrode tabs and the flattened multiple negative electrode tabs are welded to the positive electrode current collecting plate and the negative electrode current collecting plate, respectively, resulting in an electrode assembly structure having the positive electrode current collecting plate and negative electrode current collecting plate on the same side of the body portion.

In some embodiments, during the die-cutting of the multiple positive electrode tabs, at least one first notch is made by die-cutting at an edge of a side of at least one of the multiple positive electrode tabs away from the positive electrode plate, so as to divide the positive electrode tab into multiple positive electrode tab segments along the winding direction by the at least one first notch; and/or
during the die-cutting of the multiple negative electrode tabs, at least one second notch is made by die-cutting at an edge of a side of at least one of the multiple negative electrode tabs away from the negative electrode plate, so as to divide the negative electrode tab into multiple negative electrode tab segments along the winding direction by the at least one second notch.

The first notch is made by die-cutting at the side edge of the positive electrode tab to divide the positive electrode tab into separated multiple positive electrode tab segments, so that the positive electrode tab is less likely to wrinkle when flattened, reducing the risk of tab breakage caused by wrinkles and the risk of short circuits caused by wrinkles inserted into the electrode plates. Similarly, the second notch is made by die-cutting at the side edge of the negative electrode tab to divide the negative electrode tab into separated multiple negative electrode tab segments, so that the negative electrode tab is less likely to wrinkle when flattened, reducing the risk of tab breakage caused by wrinkles and the risk of short circuits caused by wrinkles inserted into the electrode plates.

## BRIEF DESCRIPTION OF DRAWINGS

To describe the technical solutions in the embodiments of this disclosure more clearly, the following briefly describes the accompanying drawings required for describing the embodiments of this disclosure. Apparently, the accompanying drawings in the following description show merely some embodiments of this disclosure, and a person of ordinary skills in the art may still derive other drawings from the accompanying drawings without creative efforts.

With reference to the accompanying drawings, this disclosure may be more clearly understood in the light of the following detailed description.

FIG. 1 is a schematic structural diagram of an electric apparatus according to some embodiments of this disclosure;

FIG. 2 is a schematic structural diagram of a battery according to some embodiments of this disclosure;

FIG. 3 is a schematic cross-section view of a winding structure formed according to some embodiments of an electrode assembly of this disclosure;

FIG. 4 is a schematic diagram of a positive electrode plate unfolded according to some embodiments of an electrode assembly of this disclosure;

FIG. 5 is a schematic diagram of a negative electrode plate unfolded according to some embodiments of an electrode assembly of this disclosure;

FIG. 6 is a schematic structural diagram of an electrode assembly according to some embodiments of this disclosure;

FIG. 7 and FIG. 8 are schematic diagrams of an end portion of the embodiment shown in FIG. 6 from a top view angle, with an insulating member present and removed, respectively;

FIG. 9 is a schematic structural diagram of an electrode assembly according to some other embodiments of this disclosure;

FIG. 10 is a schematic diagram of an end portion of the embodiment shown in FIG. 9 from a top view angle, with an insulating member removed;

FIG. 11 and FIG. 12 are schematic diagrams of coverage of electrode tabs and an insulating member at an end portion of a body portion in the embodiment of FIG. 6 and the embodiment of FIG. 9, respectively;

FIG. 13 is a schematic diagram of arrangement of a positive electrode plate, a negative electrode plate, and a separator according to some embodiments of an electrode assembly of this disclosure;

FIG. 14 is a schematic structural diagram of an electrode assembly according to still some other embodiments of this disclosure;

FIG. 15 is a schematic diagram of arrangement of a positive electrode plate, a negative electrode plate, a separator, and an insulating member according to some embodiments of an electrode assembly of this disclosure; and

FIG. 16 is a schematic flowchart of a manufacturing method of electrode assembly according to this disclosure.

It should be understood that, sizes of various parts shown in the accompanying drawings are not drawn to scale. Moreover, the same or similar reference signs represent the same or similar elements.

Description of reference signs:

10: battery cell; 10A: positive electrode plate; 10B: negative electrode plate; 10C: separator; 100: winding structure; 11: positive electrode current collector; 12 positive electrode active substance film layer; 13: negative electrode current collector; 14: negative electrode active substance film layer; 15: insulation film layer; 16: first side edge; 17: second side edge; 18: third side edge; 121: positive electrode coating edge; 151: coating edge of insulation film layer; 153: negative electrode coating edge;

20: positive electrode tab; 21: positive electrode tab segment; 22: first notch; 23: root portion of first notch;

30: negative electrode tab; 31: negative electrode tab segment; 32: second notch; 33: root portion of second notch;

40: insulating member; 41: second central hole; 42: foremost end of insulating member;

51: positive electrode current collecting plate; 52: negative electrode current collecting plate; 53: first electrode terminal; 54: second electrode terminal;

60: battery; 61: box; 62: cover;

70: vehicle.

## DESCRIPTION OF EMBODIMENTS

The following further describes the embodiments of this disclosure in detail with reference to the accompanying drawings and implementations. The detailed description and accompanying drawings of the following embodiments are used to exemplarily illustrate the principle of this disclosure, but are not intended to limit the scope of this disclosure, that is, this disclosure is not limited to the described embodiments.

In the descriptions of this disclosure, it should be noted that, unless otherwise stated, "a plurality of" means two or more; and the orientations or positional relationships indicated by the terms "upper", "lower", "left", "right", "inside", "outside", and the like are merely intended to help the descriptions of this disclosure and simplify the descriptions other than indicate or imply that the apparatuses or components must have specific orientations, or be constructed and manipulated with specific orientations, and therefore shall not be construed as limitations on this disclosure. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The words of orientation appearing in the following description are all directions shown in the drawings, and do not limit the specific structure of this disclosure. In the descriptions of this disclosure, it should be also noted that unless otherwise specified and defined explicitly, the terms "installing", "coupling", and "connecting" should be understood in a broad sense. For example, these terms may refer to fixed connections, or detachable connections, or integral connections, and they may refer to direct connections, or indirect connections through an intermediate medium. A person of ordinary skills in the art may understand specific meanings of the foregoing terms in this disclosure as appropriate to specific situations.

The following describes in detail some implementations of the present invention with reference to the accompanying drawings. In absence of conflicts, features in the following embodiments may be combined.

In some related art, an electrode assembly in a cylindrical battery cell has tabs extending from two ends of the winding structure, where the tabs extending from one end are electrically connected to the housing and guided through the housing to the same side as the tabs extending from the other end. Study shows that such cylindrical battery cell experiences an increase in internal resistance due to the resistance of the housing. Additionally, heat is generated when current flows through the housing, which affects the heat dissipation inside the battery, thus affecting the battery performance.

In view of this, embodiments of this disclosure provide a battery cell, a battery, an electric device, and an electrode assembly and a manufacturing method thereof, so as to improve battery performance.

The electrode assembly according to the embodiments of this disclosure is applicable to various types of battery cells. The battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. In terms of packaging method, battery cells are typically classified into cylindrical cell, prismatic cell, and pouch cell. The type of battery cell is not limited in the embodiments of this application.

The battery cell according to the embodiments of this disclosure is applicable to various types of batteries. Batteries can be used to power electric devices such as vehicles, for example, to provide power for controlling the vehicle or power for driving the vehicle. The battery may include a housing and a battery module, where the housing is configured to provide accommodation space for the battery module, and the battery module is mounted within the housing. The housing may be made of metal. The battery module may include a plurality of battery cells connected in series, parallel, or series-parallel. The battery cell is a smallest unit constituting a battery. The battery cell includes an electrode assembly in which electrochemical reactions take place.

The battery according to the embodiments of this disclosure is applicable to various types of electric apparatuses using batteries. The electric apparatus may be a mobile phone, a portable device, a laptop, an electric scooter, an electric vehicle, a ship, a spacecraft, an electric toy, an electric tool, or the like. For example, the spacecraft includes an airplane, a rocket, a space shuttle, and a spaceship. The electric toy includes a fixed or mobile electric toy, such as a game console, an electric vehicle toy, an electric ship toy, and an electric airplane toy. The electric tool includes an electric metal cutting tool, an electric grinding tool, an electric assembly tool, and an electric railway-specific tool, such as an electric drill, an electric grinder, an electric wrench, an electric screwdriver, an electric hammer, an electric impact drill, a concrete vibrator, and an electric planer. The embodiments of the present invention impose no special limitation on the foregoing electric apparatus.

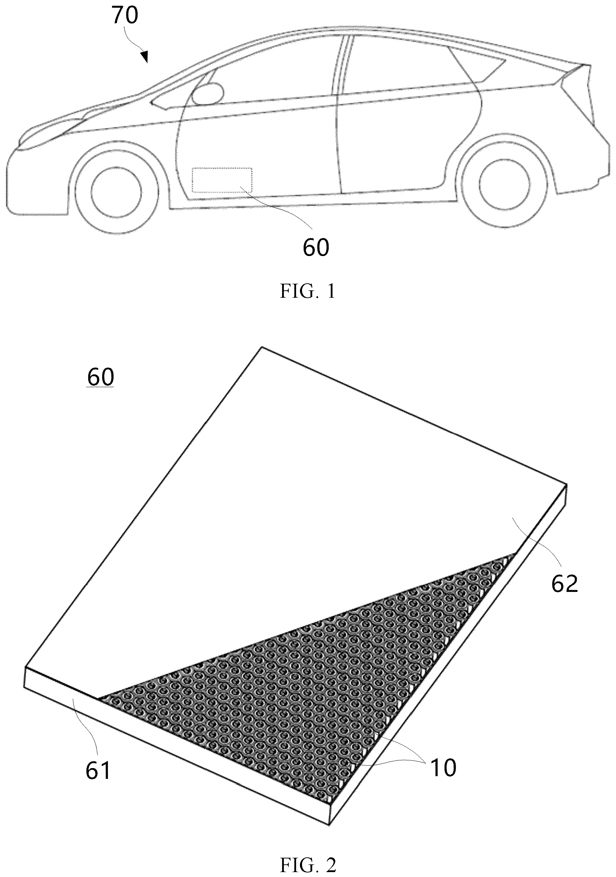

FIG. 1 is a schematic structural diagram of an electric apparatus according to some embodiments of this disclosure. For ease of description, the electric apparatus being a vehicle is used as an example for description. As shown in FIG. 1, the vehicle 70 is provided with a battery 60 inside, and the battery 60 is disposed at the bottom or in the front or at the rear of the vehicle. The battery 60 supplies power to the vehicle. For example, the battery 60 is used as an operational power source for the vehicle. The battery 60 may be used as a power source for apparatuses such as new energy vehicles, ships, and smart electrical cabinets. The battery 60 may also be used as a power supply component to provide required electrical energy to various electrical components of apparatuses.

FIG. 2 is a schematic structural diagram of a battery according to some embodiments of this disclosure. Referring to FIG. 2, in some embodiments, the battery 60 includes a box 61, a cover 62, and one or more battery cells 10 disposed in the box 61. For easy observation of the plurality of battery cells 10 within the box 61, FIG. 2 shows only part of the cover 62. The battery cells 10 are electrically connected to each other, such as in series, parallel, or series-parallel, to achieve the desired electrical performance parameters of the battery 60. The plurality of battery cells 10 are arranged in rows, and one or more rows of battery cells 10 can be provided in the box as needed.

In some embodiments, the battery cells 10 of the battery 60 may be arranged along at least one of a length direction and a width direction of the box. At least one row or one column of battery cells 10 may be provided according to practical needs. One or more layers of battery cells 10 may also be provided in a height direction of the battery 60 according to needs.

In some embodiments, the battery module may be first formed by connecting the plurality of battery cells 10 in series, parallel, or series-parallel, and then a plurality of battery modules are connected in series, parallel, or series-parallel to form an entirety which is accommodated in the box 61. In some other embodiments, all the battery cells 10 are directly connected in series, parallel, or series-parallel to form an entirety which is then accommodated in the box.

The battery cell 10 may include a housing, an end cover, and an electrode assembly. The housing has a cavity for accommodating the electrode assembly, and an end portion of the housing may be constructed to be open for disposing an end cover assembly. The electrode assembly is mounted in the cavity of the housing. The battery cell 10 further includes an electrolyte in addition to the electrode assembly, the end cover, and the housing.

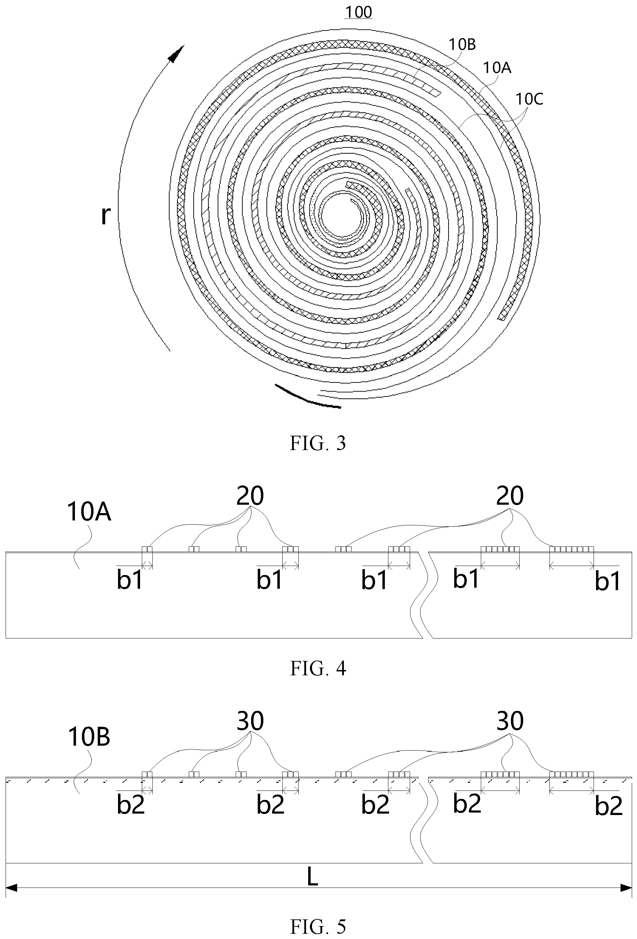

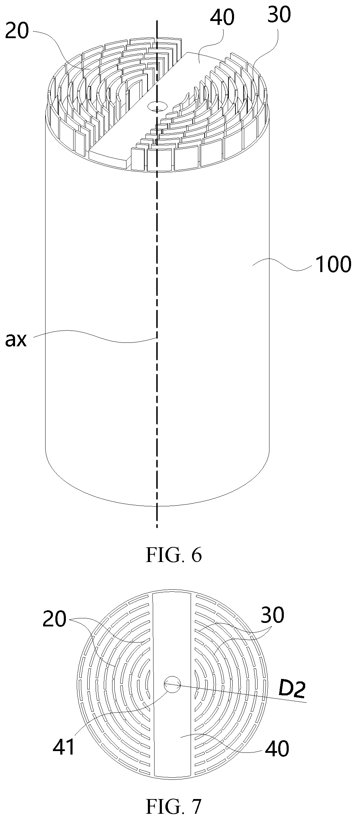

FIG. 3 is a schematic cross-section view of a winding structure formed according to some embodiments of an electrode assembly of this disclosure. FIG. 4 is a schematic diagram of a positive electrode plate unfolded according to some embodiments of an electrode assembly of this disclosure. FIG. 5 is a schematic diagram of a negative electrode plate unfolded according to some embodiments of an electrode assembly of this disclosure. FIG. 6 is a schematic structural diagram of an electrode assembly according to some embodiments of this disclosure.

Referring to FIG. 3, in some embodiments, the electrode assembly includes: a body portion 100, multiple positive electrode tabs 20, and multiple negative electrode tabs 30. The body portion 100 includes a positive electrode plate 10A, a negative electrode plate 10B, and a separator 10C disposed between the positive electrode plate 10A and the negative electrode plate 10B. The positive electrode plate 10A, the separator 10C, and the negative electrode plate 10B are wound along a winding direction r to form a winding structure, for example, forming a stacking structure of the negative electrode plate 10B, separator 10C, positive electrode plate 10A, separator 10C, ... formed along a radial direction of a winding mechanism in FIG. 3. The winding structure may be formed into a cylindrical winding structure after winding. Correspondingly, the housing used for the battery cell including the electrode assembly is a cylindrical housing structure.

The battery cell 10 functions mainly relying on migration of metal ions between the positive electrode plate and the negative electrode plate. The separator 10C may be made of PP (polypropylene, polypropylene), PE (polyethylene, polyethylene), or the like.

Referring to FIG. 4 and FIG. 6, the multiple positive electrode tabs 20 are separately connected to at least two positive electrode plate winding layers in the winding structure and spaced apart along the winding direction r. Referring to FIG. 5 and FIG. 6, the multiple negative electrode tabs 30 are separately connected to at least two negative electrode plate winding layers in the winding structure and spaced apart along the winding direction r. The multiple positive electrode tabs 20 and the multiple negative electrode tabs 30 are located at a same end portion of the body portion 100 in a direction perpendicular to a winding direction r.

The multiple positive electrode tabs connected to the positive electrode plate and the multiple negative electrode tabs connected to the negative electrode plate are disposed on a same side of the winding structure, so that the current collector of the positive electrode plate and the current collector of the negative electrode plate can collect currents separately and output currents from the same side. Compared to the structure in which tabs extend from two ends of the winding structure in the related technology, this embodiment can shorten the path for electrons to reach the pole through the electrode plate, so that the tabs do not require the housing to conduct currents, eliminating the adverse effect of the housing resistance on the internal resistance of the battery and the adverse effect of the heat generated by the housing on the heat dissipation inside the battery. This reduces the internal resistance of the battery, improves heat dissipation of the battery, and enhances the power and fast-charging capability of the battery.

Referring to FIG. 4 to FIG. 6, a length b1 of the positive electrode tabs 20 connected to the respective positive electrode plate winding layers in the winding direction r increases along the winding direction r, and a length b2 of the negative electrode tabs 30 connected to the respective negative electrode plate winding layers in the winding direction r increases along the winding direction r.

The lengths of the positive electrode tabs and negative electrode tabs connected to the respective electrode plate winding layers are made increase along the winding direction, so that the positive electrode tabs after winding of the electrode plate can overlap inwardly and approach each other according to curvature of the corresponding electrode plate winding layers during bending and flattening, and the negative electrode tabs after winding of the electrode plate can overlap inwardly and approach each other according to curvature of the corresponding electrode plate winding layer during bending and flattening, thus forming the more neatly arranged positive electrode tab group and negative electrode tab group. This facilitates separation of the positive and negative electrodes and subsequent welding of the tabs. In addition, the separated positive electrode tabs and the separated negative electrode tabs are less likely to wrinkle when bent and flattened, thus reducing the risk of tab breakage or short circuits caused by wrinkles inserted into the electrode plate.

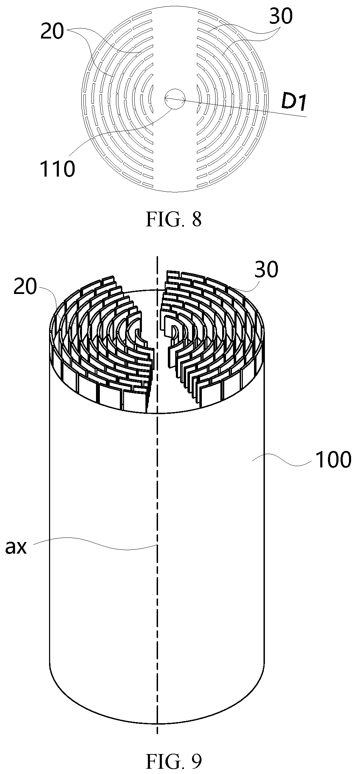

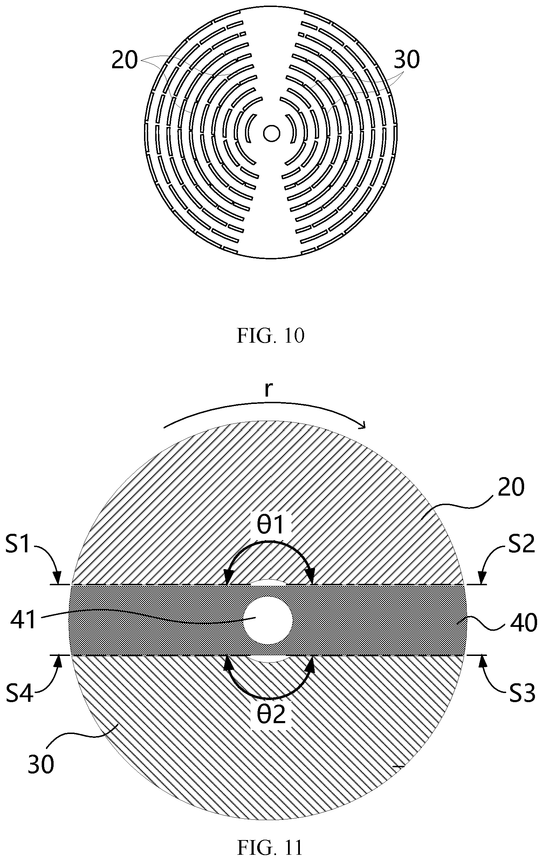

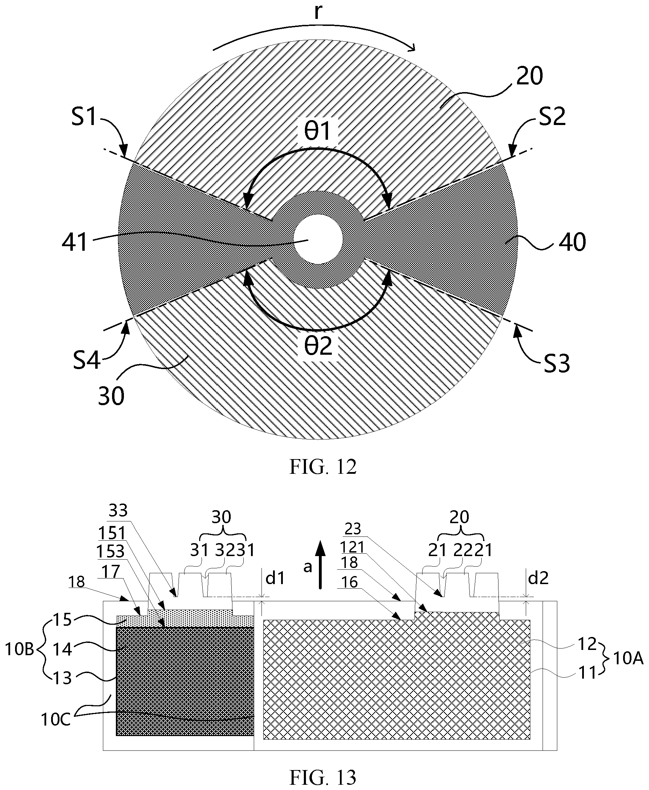

FIG. 7 and FIG. 8 are schematic diagrams of an end portion of the embodiment shown in FIG. 6 from a top view angle, with an insulating member present and removed, respectively. FIG. 9 is a schematic structural diagram of an electrode assembly according to some other embodiments of this disclosure. FIG. 10 is a schematic diagram of an end portion of the embodiment shown in FIG. 9 from a top view angle, with an insulating member removed. FIG. 11 and FIG. 12 are schematic diagrams of coverage of electrode tabs and an insulating member at an end portion of a body portion in the embodiment of FIG. 6 and the embodiment of FIG. 9, respectively.

As shown in FIG. 6 and FIG. 9, in some embodiments, the winding structure is a cylindrical winding structure wound around a winding axis ax. Compared to a cylindrical winding structure used by cylindrical batteries in the related technology in which positive electrode tabs and negative electrode tabs respectively extend at two ends, in this embodiment, the positive electrode tabs and the negative electrode tabs are located on the same side of the cylindrical winding structure, which can effectively reduce the internal resistance of the battery and improve the heat dissipation of the battery. In addition, as the circumferences of the electrode plate winding layers of the cylindrical winding structure decrease from outside to inside, the lengths of the tabs corresponding to the layers also decrease, which allows the tabs to be arranged more neatly after flattened toward the center, facilitating separation of the positive and negative electrodes and subsequent welding of the tabs.

In addition, the tabs connected to the respective electrode plate winding layers are spaced apart, so that the positive electrode tabs and negative electrode tabs after winding can be separated, reducing the risk of short circuits caused by ineffective separation of the two electrode plate groups with opposite polarities after flattening.

In FIG. 6 to FIG. 12, an angle range of the multiple positive electrode tabs 20 at the end portion of the body portion 100 with respect to the winding axis ax does not coincide with an angle range of the multiple negative electrode tabs 30 at the end portion of the body portion 100 with respect to the winding axis ax. The angle ranges of the multiple positive electrode tabs and multiple negative electrode tabs on the same side of the cylindrical winding structure are designed to not coincide with each other, effectively reducing the risk of short circuits caused by ineffective separation of the two electrode plate groups with opposite polarities after flattening.

To more effectively separate the positive electrode tabs and negative electrode tabs that are located on the same side of the body portion, in some embodiments, the electrode assembly further includes an insulating member 40, as shown in FIGs. 6, 7, 11, and 12. The insulating member 40 is disposed at the end portion of the body portion 100 connected to the multiple positive electrode tabs 20 and the multiple negative electrode tabs 30 and located between the multiple positive electrode tabs 20 and the multiple negative electrode tabs 30. The insulating member is disposed between the multiple positive electrode tabs and multiple negative electrode tabs to effectively separate the positive electrode tabs and negative electrode tabs, thus reducing the risk of short circuits.

In some embodiments, the insulating member 40 includes an insulating plastic block. The shape and size of the insulating plastic hole may be determined based on the coverage of the positive electrode tabs and negative electrode tabs. Using an insulating plastic block of a certain size to separate the positive and negative electrode tabs can effectively provide insulation between the positive and negative electrode tabs, thus preventing short circuits. Moreover, such arrangement can provide some support at the end portions of the body portion, so as to withstand certain compression force when the end portions of the battery are subjected to pressure, thus reducing the risk of decarburization at the edge of the electrode plate caused by compression on the body portion.

For a cylindrical winding structure wound around the winding axis ax, referring to FIG. 7 and FIG. 8, in some embodiments, the cylindrical winding structure has a first central hole 110 running through along an axial direction, and the insulating member 40 has a second central hole 41 communicating with the first central hole 110 along the winding axis ax. The first central hole and the second central hole are disposed on the insulating member and the cylindrical winding structure, respectively, allowing injection of electrolyte into the battery cell.

In some embodiments, the first central hole 110 and the second central hole 41 are both circular holes, and a diameter D1 of the first central hole 110 is greater than or equal to a diameter D2 of the second central hole 41. When a second central hole with a diameter not greater than that of the first central hole is used, the tabs, even if they enter or run through the second central hole from the upper surface of the insulating member after flattened, are less likely to further come into contact with the electrode plate on the radially outer side of the first central hole, thus effectively reducing the risk of short circuits.

Referring to FIG. 11 and FIG. 12, in some embodiments, the multiple positive electrode tabs 20 and the multiple negative electrode tabs 30 satisfy at least one of the following: upstream end positions of the positive electrode tabs 20 connected to the respective positive electrode plate winding layers in the winding direction r are all in a same plane (for example, a first plane S1); downstream end positions of the positive electrode tabs 20 connected to the respective positive electrode plate winding layers in the winding direction r are all in a same plane (for example, a second plane S2); upstream end positions of the negative electrode tabs 30 connected to the respective negative electrode plate winding layers in the winding direction r are all in a same plane (for example, a third plane S3); and downstream end positions of the negative electrode tabs 30 connected to the respective negative electrode plate winding layers in the winding direction r are all in a same plane (for example, a fourth plane S4).

In this embodiment, the upstream end positions of the positive electrode tabs connected to the respective positive electrode plate winding layers in the winding direction are aligned to a same plane. This helps to ensure the neat alignment of the end portions at that side after the positive electrode tabs at each layer are flattened inwardly, facilitating the separation of the positive and negative electrodes and the subsequent welding of the tabs. Similarly, the downstream end portions of the positive electrode tabs are aligned to a same plane, the upstream end portions of the negative electrode tabs are aligned to a same plane, and the downstream end portions of the negative electrode tabs are aligned to a same plane, which all ensure the neat alignment of the end portions at the corresponding sides, facilitating the separation of the positive and negative electrodes and the subsequent welding of the tabs.

Referring to FIG. 11, in some embodiments, the upstream end positions and downstream end positions of the positive electrode tabs 20 connected to the respective positive electrode plate winding layers in the winding direction r are all in a same plane, for example, the first plane S1 and the second plane S2 are coplanar. The upstream end positions and downstream end positions of the positive electrode tabs connected to the respective positive electrode plate winding layers in the winding direction are aligned to a same plane, so that an arched positive electrode tab group can be formed. Such arched positive electrode tab group, after flattened inwardly, maintains a neat alignment at both ends, achieving effective separation from the negative electrode tab group and facilitating its welding to the current collecting plate.

Similarly, the upstream end positions and downstream end positions of the negative electrode tabs 30 connected to the respective negative electrode plate winding layers in the winding direction r are all in a same plane, for example, the third plane S3 and the fourth plane S4 are coplanar. The upstream end positions and downstream end positions of the negative electrode tabs connected to the respective negative electrode plate winding layers in the winding direction are aligned to a same plane, so that an arched negative electrode tab group can be formed. Such arched negative electrode tab group, after flattened inwardly, maintains a neat alignment at both ends, achieving effective separation from the negative electrode tab group and facilitating its welding to the current collecting plate.

Referring to FIG. 12, in some embodiments, the upstream end positions of the positive electrode tabs 20 connected to the respective positive electrode plate winding layers in the winding direction r and the upstream end positions of the negative electrode tabs 30 connected to the respective negative electrode plate winding layers in the winding direction r are all in a same plane, for example, the first plane S1 and the third plane S3 are coplanar. The downstream end positions of the positive electrode tabs 20 connected to the respective positive electrode plate winding layers in the winding direction r and the downstream end positions of the negative electrode tabs 30 connected to the respective negative electrode plate winding layers in the winding direction r are all in a same plane, for example, the second plane S2 and the fourth plane S4 are coplanar.

In this embodiment, the upstream end positions of the positive electrode tabs connected to the respective positive electrode plate winding layers in the winding direction and the downstream end positions of the negative electrode tabs connected to the respective negative electrode plate winding layers are aligned to a same plane, and the downstream end positions of the positive electrode tabs connected to the respective positive electrode plate winding layers in the winding direction and the upstream end positions of the negative electrode tabs connected to the respective negative electrode plate winding layers are aligned to a same plane, so that fan-shaped and mutually symmetrical positive and negative electrode tab groups can be formed. The tab groups of such structure have good consistency, making it easier to maintain consistent welding effects during welding.

For a cylindrical winding structure wound around a winding axis ax, in order to improve consistency when positive and negative electrode tabs are welded to respective current collecting plates, in some embodiments, the multiple positive electrode tabs 20 and the multiple negative electrode tabs 30 are symmetric with respect to the winding axis ax, or symmetric with respect to a plane across the winding axis ax, as shown in FIG. 6 to FIG. 12. In this way, the flattened positive electrode tab group and negative electrode tab group can be kept consistent in shape, thus achieving consistent welding effects.

Referring to FIG. 11 and FIG. 12, in some embodiments, the upstream end positions of the positive electrode tabs 20 connected to the respective positive electrode plate winding layers in the winding direction r are all in a first plane S1, the downstream end positions of the positive electrode tabs 20 connected to the respective positive electrode plate winding layers in the winding direction r are all in a second plane S2, and a range of an included angle $\theta 1$ between the first plane S1 and the second plane S2 in a circumferential direction can satisfy: $\theta 1 = K1 * (CAL)$ and $\theta 1 \leq 180$ degrees. C is capacity of a battery using the electrode assembly, L is total length of the negative electrode plate 10B, and K1 is a first proportionality parameter.

The upstream end positions of the negative electrode tabs 30 connected to the respective negative electrode plate winding layers in the winding direction r are all in a third plane S3, the downstream end positions of the negative electrode tabs 30 connected to the respective negative electrode plate winding layers in the winding direction r are all in a fourth plane S4, and a range of an included angle $\Theta 2$ between the third plane S3 and the fourth plane S4 in a circumferential direction can satisfy: $\theta 2 = K2 * (CAL)$ and $\theta 2 \leq 180$ degrees. C is capacity of a battery using the electrode assembly, L is total length of the negative electrode plate 10B, and K2 is a second proportionality parameter.

The value range of the above included angle is not greater than 180 degrees, and if it exceeds 180 degrees, the negative electrode tabs or positive electrode tabs, after flattened, are likely to come into contact with the tabs of the other polarity, leading to the risk of short circuits. The included angle range corresponding to the tab group, the total length L of the negative electrode plate, and the battery capacity C are all related to the density of currents flowing through the tabs. When the battery capacity C is constant, a longer total length L of the negative electrode plate corresponds to fewer charges per unit along the circumferential length. Therefore, under a condition that the allowable current density is met, a tab group with a smaller included angle range can be used. When the total length L of the negative electrode plate is constant, a larger battery capacity C corresponds to more charges per unit along the circumferential length. To avoid overcurrent heating caused by excessively high density of currents flowing through the tabs, a tab group with a greater included angle range can be used.

In some embodiments, the capacity C of the electrode assembly is in unit of ampere-hours, the total length L of the negative electrode plate 10B is in unit of millimeters, the first proportionality parameter K1 is greater than or equal to $12000\frac{mm \cdot kWh}{Ah}$, and the second proportionality parameter K2 is greater than or equal to $12000\frac{mm \cdot kWh}{Ah}$. Limiting values of the first proportionality parameter K1 and the second proportionality parameter K2 within suitable ranges allows the temperature of the tabs to be maintained within an allowable range during charging, avoiding overheating that could otherwise affect the performance of the chemical substances in the battery using the electrode assembly.

With reference to the foregoing embodiments, when the electrode assembly is used in a lithium secondary battery, because the lithium salt, solvent, positive electrode active substance, and negative electrode active substance are subject to accelerated side reactions or even decomposition at high temperatures, the temperature should be controlled below 80°C, and preferably below 60°C, during normal use of the electrode assembly. In an experimental example, the capacity C of the battery assembly is 45 ampere-hours, and the total length L of the negative electrode plate is 4827 mm.

Assuming that $K1=12000\frac{mm \cdot kWh}{Ah}$ and $K2=12000\frac{mm \cdot kWh}{Ah}$, both θ1 and θ2 are approximately equal to 112 degrees. Therefore, when the actual included angles θ1 and θ2 are set to 120 degrees, which is greater than 112 degrees, K1 and K2 are greater than $12000\frac{mm \cdot kWh}{Ah}$. The measured temperature at the root portion of the tab during fast charging is 50°C, satisfying the requirement that the tab temperature should be below 60°C or 80°C for this type of battery.

Referring to the foregoing example, in another experimental example, the capacity C of the battery assembly is 32.5 ampere-hours, and the total length L of the negative electrode plate is 4585 mm. Assuming that $K1=12000\frac{mm \cdot kWh}{Ah}$ and $K2=12000\frac{mm \cdot kWh}{Ah}$, both θ1 and θ2 are approximately equal to 85 degrees. Therefore, when the actual included angles θ1 and θ2 are set to 90 degrees, which is greater than 85 degrees, K1 and K2 are greater than $12000\frac{mm \cdot kWh}{Ah}$. The measured temperature at the root portion of the tab during fast charging is 52°C, satisfying the requirement that the tab temperature should be below 60°C or 80°C for this type of battery.

Referring to the foregoing examples, in a comparative experimental example, the capacity C of the battery assembly is 30 ampere-hours, and the total length L of the negative electrode plate is 4585 mm. Assuming that $K1=12000\frac{mm \cdot kWh}{Ah}$ and $K2=12000\frac{mm \cdot kWh}{Ah}$, both θ1 and θ2 are approximately equal to 78 degrees. Therefore, when the actual included angles θ1 and θ2 are set to 30 degrees, which is less than 78 degrees, K1 and K2 are less than $12000\frac{mm \cdot kWh}{Ah}$. The measured temperature at the root portion of the tab during fast charging is 80°C, not satisfying the requirement that the tab temperature should be below 60°C or 80°C for this type of battery.

Based on the above experimental examples and comparative experimental examples, use of appropriate included angles θ1 and θ2 can reduce the tab temperature during fast charging, to avoid the excessively high temperature of the tabs from affecting the performance of the chemical substances in the battery, decreasing the battery life, and causing battery failure.

FIG. 13 is a schematic diagram of arrangement of a positive electrode plate, a negative electrode plate, and a separator according to some embodiments of an electrode assembly of this disclosure. Referring to FIG. 4 and FIG. 13, in some embodiments, at least one of the multiple positive electrode tabs 20 has at least one first notch 22 on an edge of a side away from the positive electrode plate 10A, and the at least one first notch 22 divides the positive electrode tab 20 into multiple positive electrode tab segments 21 along the winding direction r.

The first notch is provided on the side edge of the positive electrode tab to divide the positive electrode tab into separated multiple positive electrode tab segments, so that the positive electrode tab is less likely to wrinkle when flattened, reducing the risk of tab breakage caused by wrinkles and the risk of short circuits caused by wrinkles inserted into the electrode plates.

At least one of the multiple negative electrode tabs 30 has at least one second notch 32 on an edge of a side away from the negative electrode plate 10B, and the at least one second notch 32 divides the negative electrode tab 30 into multiple negative electrode tab segments 31 along the winding direction r. The second notch is provided on the side edge of the negative electrode tab to divide the negative electrode tab into separated multiple negative electrode tab segments, so that the negative electrode tab is less likely to wrinkle when flattened, reducing the risk of tab breakage caused by wrinkles and the risk of short circuits caused by wrinkles inserted into the electrode plates.

In some other embodiments, the positive electrode tabs may not have a first notch and may be continuous in the winding direction r without being divided into multiple positive electrode tab segments; and the negative electrode tabs may also not have a second notch and may be continuous in the winding direction r without being divided into multiple negative electrode tab segments.

In some embodiments, widths of the positive electrode tab segments 21 are the same in the winding direction r, and the number of positive electrode tab segments 21 in each positive electrode tab 20 connected to the respective positive electrode plate winding layers increases along the winding direction r. For example, the number of positive electrode tab segments 21 corresponding to the inner positive electrode plate winding layers is less than the number of positive electrode tab segments 21 corresponding to the outer positive electrode plate winding layers. The change in the number may be continuous or in stages. The use of positive electrode tab segments 21 of the same width can reduce the processing difficulty of the positive electrode tabs and results in a neater positive electrode tab group after flattening. Correspondingly, a change in length b1 of the positive electrode tab can be implemented by a change in number of corresponding positive electrode tab segments 21 connected to the respective positive electrode plate winding layers.

Widths of the negative electrode tab segments 31 are the same in the winding direction r, and the number of negative electrode tab segments 31 in each negative electrode tab 30 connected to the respective negative electrode plate winding layers increases along the winding direction r. For example, the number of negative electrode tab segments 31 corresponding to the inner negative electrode plate winding layers is less than the number of negative electrode tab segments 31 corresponding to the outer negative electrode plate winding layers. The change in the number may be continuous or in stages. The use of negative electrode tab segments 31 of the same width can reduce the processing difficulty of the negative electrode tabs and results in a neater negative electrode tab group after flattening. Correspondingly, a change in length b2 of the negative electrode tab can be implemented by a change in number of corresponding negative electrode tab segments 31 connected to the respective negative electrode plate winding layers.

Referring to FIG. 13, in some embodiments, the positive electrode plate 10A includes a positive electrode current collector 11 and a positive electrode active substance film layer 12 covering surface of the positive electrode current collector 11. The multiple positive electrode tabs 20 are connected to a first side edge 16 of the positive electrode current collector 11 extending along the winding direction r. The positive electrode active substance film layer 12 extends continuously from the surface of the positive electrode current collector 11 to part of surface of the multiple positive electrode tabs 20.

A lithium-ion battery is used as an example, for which, the positive electrode current collector 11 may be made of aluminum and the positive electrode active substance film layer 12 may be lithium cobaltate, lithium iron phosphate, ternary lithium, lithium manganate, or the like. In some embodiments, the multiple positive electrode tabs 20 may be welded to the first side edge of the positive electrode current collector 11. The multiple positive electrode tabs 20 may alternatively be formed by die-cutting the positive electrode current collector 11.

Typically, the edge part of the positive electrode active substance film layer is thinner, and the thinner positive electrode active substance film layer may result in an excessively large gap between the electrode plates, making it difficult to retain the electrolyte. As a result, electrolyte infiltration in some areas is inadequate, and lithium precipitation is more likely to occur. In making positive electrode tabs on the positive electrode plate by die-cutting or the like, the side edge of the positive electrode plate, provided with the positive electrode active substance film layer, can be removed so that the positive electrode active substance film layer extends continuously from the surface of the positive electrode current collector to part of the surface of the positive electrode tabs. Correspondingly, the side edge of the positive electrode plate that is closer to the positive electrode tabs and covered with the positive electrode active substance film layer has a thickness more consistent with that of other positions of the positive electrode plate, making it easier to retain the electrolyte, thus achieving better electrolyte infiltration and reducing the risk of lithium precipitation.

The negative electrode plate 10B includes a negative electrode current collector 13, a negative electrode active substance film layer 14 covering surface of the negative electrode current collector 13, and an insulation film layer 15 covering surface of the negative electrode current collector 13. The multiple negative electrode tabs 30 are connected to a second side edge 17 of the negative electrode current collector 13 extending along the winding direction r. The insulation film layer 15 (for example, a ceramic insulation layer) is located before the negative electrode active substance film layer 14 in a first direction a and extends continuously from the surface of the negative electrode current collector 13 to part of the surface of the multiple negative electrode tabs 30. The insulation layer 15 can prevent the burrs on the cut edge of the anode electrode plate from piercing the separator and causing a short circuit due to contact with the cathode electrode plate.

The negative electrode current collector 13 may be made of copper, and the negative electrode active substance film layer 14 may be carbon, silicon, or the like. In some embodiments, the multiple negative electrode tabs 30 may be welded to the second side edge 17 of the negative electrode current collector 13. The multiple negative electrode tabs 30 may alternatively be formed by die-cutting the negative electrode current collector 13.

Referring to FIG. 13, the first direction a is an extension direction of the multiple positive electrode tabs 20 with respect to the positive electrode plate 10A or an extension direction of the multiple negative electrode tabs 30 with respect to the negative electrode plate 10B, and the first direction is perpendicular to the winding direction r.

Similar to the structure that the positive electrode active substance film layer on the positive electrode plate is thinner at the edge, the edge part of the insulation film layer is also thinner. The thinner insulation film layer may result in an excessively large gap between the electrode plates, making it difficult to retain the electrolyte. As a result, electrolyte infiltration in some areas is inadequate, and lithium precipitation is more likely to occur. In making negative electrode tabs on the negative electrode plate by die-cutting or the like, the side edge of the negative electrode plate, provided with the insulation film layer, can be removed so that the insulation film layer extends continuously from the surface of the negative electrode current collector to part of the surface of the negative electrode tabs. Correspondingly, the side edge of the negative electrode plate that is closer to the negative electrode tabs and covered with the insulation film layer has a thickness more consistent with that of other positions of the negative electrode plate, making it easier to retain the electrolyte, thus achieving better electrolyte infiltration and reducing the risk of lithium precipitation.

In FIG. 13, in the first direction a, a foremost end of the extension part of the positive electrode active substance film layer 12 on the multiple positive electrode tabs 20 is located before the first side edge 16. For the method of forming the positive electrode tab by die-cutting, the first side edge 16 is equivalent to the die-cut edge of the positive electrode plate 10A, and the foremost end of the extension part of the positive electrode active substance film layer 12 on the positive electrode tab 20 is equivalent to the positive electrode coating edge 121.

If the opposite side edge of the first side edge 16 in a direction opposite to the first direction a is used as a reference, the height of the positive electrode coating edge 121 is greater than that of the die-cut edge of the positive electrode plate 10A. In this case, a part of the positive electrode plate that is outside the positive electrode tabs and lower than the positive electrode coating edge 121 by a certain height can be removed during die-cutting, thus removing a part of the positive electrode plate which corresponds to the thinned part at the edge of the positive electrode active substance film layer. This can alleviate the possible lack of electrolyte in that part, and reduce the risk of local lithium precipitation.

In FIG. 13, in the first direction a, the first side edge 16 is located behind the second side edge 17. For the method of forming the positive and negative electrode tabs by die-cutting, the first side edge 16 is equivalent to the die-cut edge of the positive electrode plate 10A, and the second side edge 17 is equivalent to the die-cut edge of the negative electrode plate 10B. If the opposite side edge of the first side edge 16 in a direction opposite to the first direction a is used as a reference, the height of the die-cut edge of the positive electrode plate is less than that of the die-cut edge of the negative electrode plate. In this way, during flattening of the negative electrode tabs, if tab wrinkles are inserted towards the electrode plate, the negative electrode plate will first lap with the insulation coating on the negative electrode plate other than the positive electrode active substance film layer on the positive electrode plate, thus reducing the risk of short circuits.

In FIG. 13, in the first direction a, the foremost end of the extension part of the positive electrode active substance film layer 12 on the multiple positive electrode tabs 20 is located behind the foremost end of the extension part of the insulation film layer 15 on the multiple negative electrode tabs 30. The foremost end of the extension art of the positive electrode active substance film layer 12 on the positive electrode tabs 20 is defined as the positive electrode coating edge 121, and the foremost end of the extension part of the insulation film layer 15 on the negative electrode tabs 30 is defined as the coating edge 151 of the insulation film layer.

If the opposite side edge of the first side edge 16 in a direction opposite to the first direction a is used as a reference, the height of the positive electrode coating edge 121 on the positive electrode tabs is less than that of the coating edge 151 of the insulation film layer. In this way, when the end portion of the electrode assembly is subjected to compression, the insulation layer is compressed before the positive electrode active substance film layer. This can reduce the risk of short circuits caused by decarburization of the positive electrode active substance film layer when compressed.

In some embodiments, at least one of the multiple positive electrode tabs 20 has at least one first notch 22 on an edge of a side away from the positive electrode plate 10A, the at least one first notch 22 divides the positive electrode tab 20 into multiple positive electrode tab segments 21 along the winding direction r, and a root portion 23 of the at least one first notch 22 is located before the separator 10C in the first direction. At least one of the multiple negative electrode tabs 30 has at least one second notch 32 on an edge of a side away from the negative electrode plate 10B, the at least one second notch 32 divides the negative electrode tab 30 into multiple negative electrode tab segments 31 along the winding direction r, and a root portion 33 of the at least one second notch 32 is located before the separator 10C in the first direction.

If the opposite side edge of the first side edge in a direction opposite to the first direction is used as a reference, the height of the root portion of the first notch and the height of the root portion of the second notch are greater than the height of the separator. The root portion of the first notch and the root portion of the second notch are typically the positions where the tab segments are bent and flattened. Therefore, during welding of the flattened tab segments to the current collecting plates, the tab segments heated during welding can be kept at a distance from the separator, thus reducing the possibility of the separator being scorched during welding, and preventing short circuits caused by the separator being scorched.

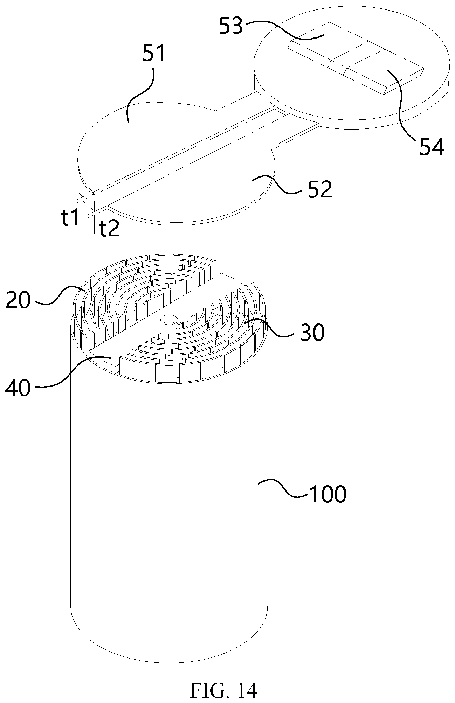

FIG. 14 is a schematic structural diagram of an electrode assembly according to still some other embodiments of this disclosure. Referring to FIG. 14, in some embodiments, the electrode assembly further includes: a positive electrode current collecting plate 51 and a negative electrode current collecting plate 52. The positive electrode current collecting plate 51 is located on a side of the multiple positive electrode tabs 20 away from the body portion 100 and fixedly connected to the flattened multiple positive electrode tabs 20 by welding. The negative electrode current collecting plate 52 is located on a side of the multiple negative electrode tabs 30 away from the body portion 100 and fixedly connected to the flattened multiple negative electrode tabs 30 by welding. In FIG. 14, the positive electrode current collecting plate 51 may be electrically connected to either of a first electrode terminal 53 and a second electrode terminal 54, and the negative electrode current collecting plate 52 may be electrically connected to the other of the first electrode terminal 53 and the second electrode terminal 54.

Referring to FIG. 13 and FIG. 14, the multiple positive electrode tabs 20 are bent and flattened toward the center of an end portion of the body portion 100 at the root portion 23 of the at least one first notch 22, and the multiple negative electrode tabs 30 are bent and flattened toward the center of an end portion of the body portion 100 at the root portion 33 of the at least one second notch 32.

A first distance d1 between the root portion 23 of the at least one first notch 22 and the separator 10C (to be specific, a third side edge 18 of the separator 10C) in the first direction a is greater than or equal to 1.5 times a thickness t1 of the positive electrode current collecting plate 51, that is, $d1 \geq 1.5 * t1$. A second distance d2 between the root portion 33 of the at least one second notch 32 and the separator 10C (to be specific, the third side edge 18 of the separator 10C) in the first direction a is greater than or equal to 1.5 times a thickness t2 of the negative electrode current collecting plate 52, that is, $d2 \geq 1.5 * t2$.

The thickness of the current collecting plate is related to the heat produced during welding, and a thicker current collecting plate produces higher heat during welding. Correspondingly, the first distance between the root portion of the first notch and the separator in the first direction is designed to be greater than 1.5 times the thickness of the positive electrode current collecting plate, and the second distance between the root portion of the second notch and the separator in the first direction is designed to be greater than 1.5 times the thickness of the negative electrode current collecting plate, which can effectively reduce the possibility of the separator being scorched during welding of the current collecting plates, thus preventing short circuits caused by the separator being scorched.

In some embodiments, the root portion of the first notch 22 between adjacent positive electrode tab segments 21 and the root portion of the second notch 32 between adjacent negative electrode tab segments 31 are located in a same plane perpendicular to the first direction. If the opposite side edge of the first side edge 16 in a direction opposite to the first direction a is used as a reference, the root portion 23 of the first notch 22 and the root portion 33 of the second notch 32 are disposed at the same height, so that the flattened positive electrode tabs and negative electrode tabs are in the same plane as much as possible, reducing the occurrence of false welding.

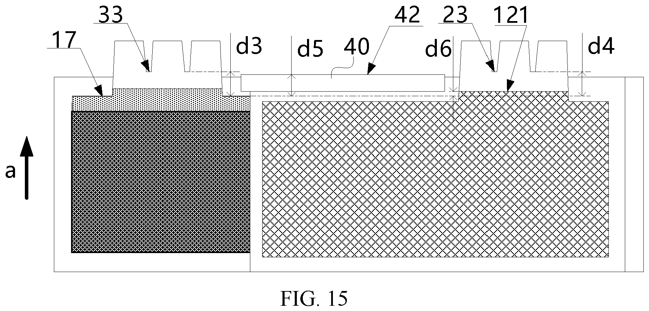

FIG. 15 is a schematic diagram of arrangement of a positive electrode plate, a negative electrode plate, a separator, and an insulating member according to some embodiments of an electrode assembly of this disclosure. FIG. 15 shows an arrangement position of an insulating member 40 with respect to the unfolded positive electrode plate 10A, negative electrode plate 10B, and separator 10C. It can be seen that the insulating member 40 is located between the positive electrode tabs 20 and the negative electrode tabs 30, and in the first direction a, a distance between the root portion 23 of the at least one first notch 22 and the second side edge 17 is a third distance d3, and a distance between the root portion 33 of the at least one second notch 32 and the second side edge 17 is a fourth distance d4.

In the first direction a, the insulating member 40 is located before the second side edge 17, and a distance between the foremost end 42 of the insulating member 40 and the second side edge 17 is a fifth distance d5. A distance between the foremost end (that is, the positive electrode coating edge 121) of the positive electrode active substance film layer 12 on the multiple positive electrode tabs 20 and the second side edge 17 is a sixth distance d6. The third distance d3, the fourth distance d4, the fifth distance d5, and the sixth distance d6 satisfy: d5<d6, d3<d5, and d4<d5.

In the first direction, the root portion of the first notch and the root portion of the second notch are positioned closer to the front than the insulating member. In this way, during welding of the current collecting plate, the current collecting plate comes into contact with and is welded to the flattened tabs first, thus effectively preventing the occurrence of false welding. In addition, the foremost end of the insulating member in the first direction is positioned closer to the front than the foremost end of the positive electrode active substance film layer on the positive electrode tabs. In this way, when the electrode assembly is subjected to compression, the insulating member is compressed before the positive electrode active substance film layer. This can reduce the risk of short circuits caused by decarburization of the positive electrode active substance film layer when compressed.

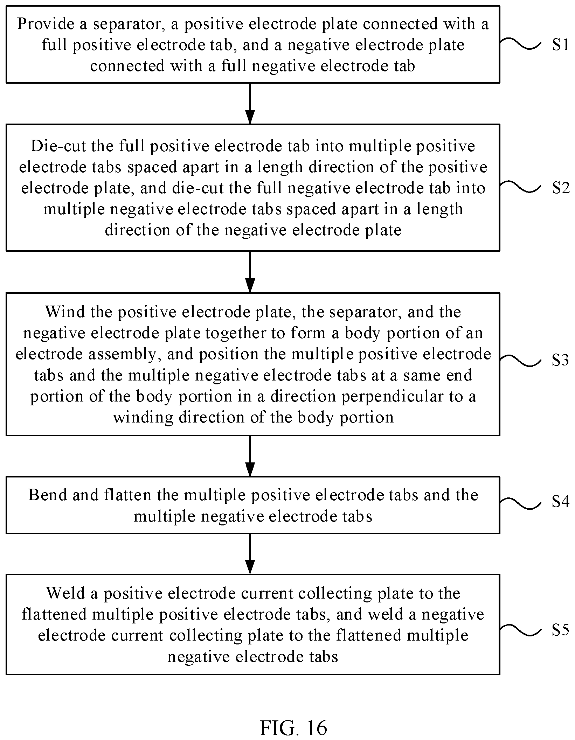

FIG. 16 is a schematic flowchart of a manufacturing method of electrode assembly according to this disclosure. The embodiments of the foregoing electrode assembly may be obtained using the manufacturing method shown in FIG. 16. Referring to FIG. 16, in some embodiments, the manufacturing method of electrode assembly includes steps S1, S2, S3, and S4. In step S 1, a separator 10C, a positive electrode plate 10A connected with a full positive electrode tab, and a negative electrode plate 10B connected with a full negative electrode tab is provided. The positive electrode plate 10A and the negative electrode plate 10B may be obtained by processes such as slurrying, coating, rolling, and slitting.

In step S2, the full positive electrode tab is die-cut into multiple positive electrode tabs 20 spaced apart in a length direction of the positive electrode plate 10A, and the full negative electrode tab is die-cut into multiple negative electrode tabs 30 spaced apart in a length direction of the negative electrode plate 10B. The full positive electrode tab and full negative electrode tab may be die-cut using a tab die-cutting device.

During the die-cutting of the full positive electrode tab and the full negative electrode tab, a length b 1 of the positive electrode tabs 20 connected to respective positive electrode plate winding layers of the body portion 100 in the winding direction r is increased along the winding direction r, and a length b2 of the negative electrode tabs 30 connected to respective negative electrode plate winding layers of the body portion 100 in the winding direction r is increased along the winding direction r.

In step S3, the positive electrode plate 10A, the separator 10C, and the negative electrode plate 10B are wound together to form a body portion 100 of the electrode assembly, and the multiple positive electrode tabs 20 and the multiple negative electrode tabs 30 are positioned at a same end portion of the body portion 100 in a direction perpendicular to the winding direction r of the body portion 100. During winding, the positive electrode tabs 20 and the negative electrode tabs 30 are staggered from each other so that they are located in different regions of the end portion of the body portion 100.

In step S4, the multiple positive electrode tabs 20 and the multiple negative electrode tabs 30 are bent and flattened, so that the multiple positive electrode tabs 20 overlap with each other and the multiple negative electrode tabs 30 overlap with each other.

In this embodiment, the multiple positive electrode tabs formed on the positive electrode plate and the multiple negative electrode tabs formed on the negative electrode plate are disposed on a same side of the winding structure through the die-cutting process, so that the current collecting plate corresponding to the positive electrode tabs and the current collecting plate corresponding to the negative electrode tabs can collect currents separately and output currents from the same side. Compared to the structure in which tabs extend from two ends of the winding structure in the related technology, this embodiment can shorten the path for electrons to reach the pole through the electrode plate, so that the tabs do not require the housing to conduct currents, eliminating the adverse effect of the housing resistance on the internal resistance of the battery and the adverse effect of the heat generated by the housing on the heat dissipation inside the battery. This reduces the internal resistance of the battery, improves heat dissipation of the battery, and enhances the power and fast-charging capability of the battery.

The lengths of the positive electrode tabs and negative electrode tabs connected to the respective electrode plate winding layers are made increase along the winding direction, so that the positive electrode tabs after winding of the electrode plate can overlap inwardly and approach each other according to curvature of the corresponding electrode plate winding layers during bending and flattening, and the negative electrode tabs after winding of the electrode plate can overlap inwardly and approach each other according to curvature of the corresponding electrode plate winding layer during bending and flattening, thus forming the more neatly arranged positive electrode tab group and negative electrode tab group. This facilitates separation of the positive and negative electrodes and subsequent welding of the tabs. In addition, the separated positive electrode tabs and the separated negative electrode tabs are less likely to wrinkle when bent and flattened, thus reducing the risk of tab breakage or short circuits caused by wrinkles inserted into the electrode plate.

Referring to FIG. 16, in some embodiments, the manufacturing method further includes step S5. Step S5 may be performed after step S4. In step S5, a positive electrode current collecting plate 51 is welded to the flattened multiple positive electrode tabs 20, and a negative electrode current collecting plate 52 is welded to the flattened multiple negative electrode tabs 30. The flattened multiple positive electrode tabs and the flattened multiple negative electrode tabs are welded to the positive electrode current collecting plate and the negative electrode current collecting plate, respectively, resulting in an electrode assembly structure having the positive electrode current collecting plate and negative electrode current collecting plate on the same side of the body portion.

In the foregoing embodiments, the manufacturing method further includes: fixing an insulating member 40 between the multiple positive electrode tabs 20 and the multiple negative electrode tabs 30 so that a tab group formed by the overlapping multiple positive electrode tabs 20 and a tab group formed by the overlapping multiple negative electrode tabs 30 are isolated via the insulating member 40. In this embodiment, the insulating member is disposed between the multiple positive electrode tabs and multiple negative electrode tabs located on the same side of the body portion, which can effectively separate the positive electrode tabs and negative electrode tabs, further reducing the risk of short circuits. The step of providing the insulating member may be performed before step S4, so as to prevent short circuits caused by contact between the flattened positive electrode plates and the flattened negative electrode plates.

In some embodiments, during the die-cutting of the multiple positive electrode tabs 20, at least one first notch 22 is made by die-cutting at an edge of a side of at least one of the multiple positive electrode tabs 20 away from the positive electrode plate 10A, so as to divide the positive electrode tab 20 into multiple positive electrode tab segments 21 along the winding direction r by the at least one first notch 22. The first notch is made by die-cutting at the side edge of the positive electrode tab to divide the positive electrode tab into separated multiple positive electrode tab segments, so that the positive electrode tab is less likely to wrinkle when flattened, reducing the risk of tab breakage caused by wrinkles and the risk of short circuits caused by wrinkles inserted into the electrode plates.

In some embodiments, during the die-cutting of the multiple negative electrode tabs 30, at least one second notch 32 is made by die-cutting at an edge of a side of at least one of the multiple negative electrode tabs 30 away from the negative electrode plate 10B, so as to divide the negative electrode tab 30 into multiple negative electrode tab segments 31 along the winding direction r by the at least one second notch 32. The second notch is made by die-cutting at the side edge of the negative electrode tab to divide the negative electrode tab into separated multiple negative electrode tab segments, so that the negative electrode tab is less likely to wrinkle when flattened, reducing the risk of tab breakage caused by wrinkles and the risk of short circuits caused by wrinkles inserted into the electrode plates.

Based on the foregoing embodiments of the electrode assembly in this disclosure, an embodiment of this disclosure further provides a battery cell including the electrode assembly described above. The battery cell using the foregoing electrode assembly has better performance, such as lower internal resistance, better heat dissipation, and better cycling performance.

According to one aspect of this disclosure, a battery is provided, including the foregoing battery cell. The battery using the foregoing battery cell has better performance, such as lower internal resistance, better heat dissipation, and better cycling performance.

According to one aspect of this disclosure, an electric apparatus is provided, including the foregoing battery. The electric apparatus using the foregoing battery has better performance.

Although this disclosure has been described with reference to the preferred embodiments, various modifications can be made to this disclosure without departing from the scope of this application and the components therein can be replaced with equivalents. In particular, as long as there is no structural conflict, the various technical features mentioned in the embodiments can be combined in any manner. This disclosure is not limited to the specific embodiments disclosed in this specification, but includes all technical solutions falling within the scope of the claims.

## Claims

1. An electrode assembly, comprising:

   a body portion (100), comprising a positive electrode plate (10A), a negative electrode plate (10B), and a separator (10C) disposed between the positive electrode plate (10A) and the negative electrode plate (10B), wherein the positive electrode plate (10A), the separator (10C), and the negative electrode plate (10B) are wound into a winding structure along a winding direction (r);
   multiple positive electrode tabs (20), respectively connected to at least two positive electrode plate winding layers in the winding structure and spaced apart along the winding direction (r); and
   multiple negative electrode tabs (30), respectively connected to at least two negative electrode plate winding layers in the winding structure and spaced apart along the winding direction (r);
   wherein the multiple positive electrode tabs (20) and the multiple negative electrode tabs (30) are located at a same end portion of the body portion (100) in a direction perpendicular to the winding direction (r), lengths of the positive electrode tabs (20) connected to the respective positive electrode plate winding layers in the winding direction (r) increase along the winding direction (r), and lengths of the negative electrode tabs (30) connected to the respective negative electrode plate winding layers in the winding direction (r) increase along the winding direction (r).

2. The electrode assembly according to claim 1, wherein the winding structure is a cylindrical winding structure wound around a winding axis (ax).

3. The electrode assembly according to any one of the preceding claims, wherein an angle range of the multiple positive electrode tabs (20) at the end portion of the body portion (100) with respect to the winding axis (ax) does not coincide with an angle range of the multiple negative electrode tabs (30) at the end portion of the body portion (100) with respect to the winding axis (ax).

4. The electrode assembly according to any one of the preceding claims, wherein at least one of the multiple positive electrode tabs (20) has at least one first notch (22) on an edge of a side thereof away from the positive electrode plate (10A), and the at least one first notch (22) divides the positive electrode tab (20) into multiple positive electrode tab segments (21) along the winding direction (r); and/or
   at least one of the multiple negative electrode tabs (30) has at least one second notch (32) on an edge of a side thereof away from the negative electrode plate (10B), and the at least one second notch (32) divides the negative electrode tab (30) into multiple negative electrode tab segments (31) along the winding direction (r).

5. The electrode assembly according to any one of the preceding claims, wherein widths of positive electrode tab segments (21) are the same in the winding direction (r), and the numbers of positive electrode tab segments (21) in the respective positive electrode tabs (20) connected to the respective positive electrode plate winding layers increase along the winding direction (r); and widths of negative electrode tab segments (31) are the same in the winding direction (r), and the numbers of negative electrode tab segments (31) in the respective negative electrode tabs (30) connected to the respective negative electrode plate winding layers increase along the winding direction (r).

6. The electrode assembly according to any one of the preceding claims, wherein the multiple positive electrode tabs (20) and the multiple negative electrode tabs (30) satisfy at least one of the following:

   upstream end positions of the positive electrode tabs (20) connected to the respective positive electrode plate winding layers in the winding direction (r) are all in a same plane;
   downstream end positions of the positive electrode tabs (20) connected to the respective positive electrode plate winding layers in the winding direction (r) are all in a same plane;
   upstream end positions of the negative electrode tabs (30) connected to the respective negative electrode plate winding layers in the winding direction (r) are all in a same plane; and
   downstream end positions of the negative electrode tabs (30) connected to the respective negative electrode plate winding layers in the winding direction (r) are all in a same plane.

7. The electrode assembly according to any one of the preceding claims, wherein upstream end positions and downstream end positions of the positive electrode tabs (20) connected to the respective positive electrode plate winding layers in the winding direction (r) are all in a same plane; and/or
   upstream end positions and downstream end positions of the negative electrode tabs (30) connected to the respective negative electrode plate winding layers in the winding direction (r) are all in a same plane.

8. The electrode assembly according to any one of the preceding claims, wherein upstream end positions of the positive electrode tabs (20) connected to the respective positive electrode plate winding layers in the winding direction (r) and upstream end positions of the negative electrode tabs (30) connected to the respective negative electrode plate winding layers in the winding direction (r) are all in a same plane; and
   downstream end positions of the positive electrode tabs (20) connected to the respective positive electrode plate winding layers in the winding direction (r) and downstream end positions of the negative electrode tabs (30) connected to the respective negative electrode plate winding layers in the winding direction (r) are all in a same plane.

9. The electrode assembly according to any one of the preceding claims, wherein the winding structure is a cylindrical winding structure wound around a winding axis (ax), and the multiple positive electrode tabs (20) and the multiple negative electrode tabs (30) are symmetric with respect to the winding axis (ax) or symmetric with respect to a plane across the winding axis (ax).

10. The electrode assembly according to any one of the preceding claims, further comprising:
   an insulating member (40), which is disposed at the end portion of the body portion (100) connected to the multiple positive electrode tabs (20) and the multiple negative electrode tabs (30) and is located between the multiple positive electrode tabs (20) and the multiple negative electrode tabs (30).

11. The electrode assembly according to any one of the preceding claims, wherein the insulating member (40) comprises an insulating plastic block.

12. The electrode assembly according to any one of the preceding claims, wherein the winding structure is a cylindrical winding structure wound around a winding axis (ax), the cylindrical winding structure has a first central hole (110) running through along an axial direction, and the insulating member (40) has a second central hole (41) communicating with the first central hole (110) along the winding axis (ax).

13. The electrode assembly according to any one of the preceding claims, wherein the first central hole (110) and the second central hole (41) are both circular holes, and a diameter D1 of the first central hole (110) is greater than or equal to a diameter D2 of the second central hole (41).

14. The electrode assembly according to any one of the preceding claims, wherein upstream end positions of the positive electrode tabs (20) connected to the respective positive electrode plate winding layers in the winding direction (r) are all in a first plane (S1), downstream end positions of the positive electrode tabs (20) connected to the respective positive electrode plate winding layers in the winding direction (r) are all in a second plane (S2), and a range of an included angle θ1 between the first plane (S1) and the second plane (S2) in a circumferential direction satisfies:

$$\theta 1 = K1 * (C/L), \text{ and } \theta 1 \leqslant 180 \text{ degrees; }$$

and/or upstream end positions of the negative electrode tabs (30) connected to the respective negative electrode plate winding layers in the winding direction (r) are all in a third plane (S3), downstream end positions of the negative electrode tabs (30) connected to the respective negative electrode plate winding layers in the winding direction (r) are all in a fourth plane (S4), and a range of an included angle θ2 between the third plane (S3) and the fourth plane (S4) in a circumferential direction satisfies:

$$\theta 2 = K2 * (C/L), \text{ and } \theta 2 \leqslant 180 \text{ degrees;}$$

wherein C is capacity of a battery using the electrode assembly, L is total length of the negative electrode plate (10B), K1 is a first proportionality parameter, and K2 is a second proportionality parameter.

15. The electrode assembly according to any one of the preceding claims, wherein the capacity C of the electrode assembly is in unit of ampere-hours, the total length L of the negative electrode plate (10B) is in unit of millimeters, the first proportionality parameter K1 is greater than or equal to $12000 \frac{mm \cdot kWh}{Ah}$, and the second proportionality parameter K2 is greater than or equal to $12000 \frac{mm \cdot kWh}{Ah}$.

16. The electrode assembly according to any one of the preceding claims, wherein the positive electrode plate (10A) comprises a positive electrode current collector (11) and a positive electrode active substance film layer (12) covering surface of the positive electrode current collector (11), wherein the multiple positive electrode tabs (20) are connected to a first side edge (16) of the positive electrode current collector (11) extending along the winding direction (r), and the positive electrode active substance film layer (12) extends continuously from the surface of the positive electrode current collector (11) to part of surface of the multiple positive electrode tabs (20); and the negative electrode plate (10B) comprises a negative electrode current collector (13), a negative electrode active substance film layer (14) covering surface of the negative electrode current collector (13), and an insulation film layer (15) covering surface of the negative electrode current collector (13), wherein the multiple negative electrode tabs (30) are connected to a second side edge (17) of the negative electrode current collector (13) extending along the winding direction (r), and the insulation film layer (15) is located before the negative electrode active substance film layer (14) in a first direction and extends continuously from the surface of the negative electrode current collector (13) to part of surface of the multiple negative electrode tabs (30), the first direction being an extension direction of the multiple positive electrode tabs (20) with respect to the positive electrode plate (10A) or an extension direction of the multiple negative electrode tabs (30) with respect to the negative electrode plate (10B), and the first direction being perpendicular to the winding direction (r).

17. The electrode assembly according to any one of the preceding claims, wherein in the first direction, a foremost end of an extension part of the positive electrode active substance film layer (12) on the multiple positive electrode tabs (20) is located before the first side edge (16).

18. The electrode assembly according to any one of the preceding claims, wherein in the first direction, the first side edge (16) is located behind the second side edge (17).

19. The electrode assembly according to any one of the preceding claims, wherein in the first direction, the foremost end of the extension part of the positive electrode active substance film layer (12) on the multiple positive electrode tabs (20) is located behind the foremost end of the extension part of the insulation film layer (15) on the multiple negative electrode tabs (30).

20. The electrode assembly according to any one of the preceding claims, wherein at least one of the multiple positive electrode tabs (20) has at least one first notch (22) on an edge of a side thereof away from the positive electrode plate (10A), the at least one first notch (22) divides the positive electrode tab (20) into multiple positive electrode tab segments (21) along the winding direction (r), and a root portion of the at least one first notch (22) is located before the separator (10C) in the first direction; and

at least one of the multiple negative electrode tabs (30) has at least one second notch (32) on an edge of a side thereof away from the negative electrode plate (10B), the at least one second notch (32) divides the negative electrode tab (30) into multiple negative electrode tab segments (31) along the winding direction (r), and a root portion of the at least one second notch (32) is located before the separator (10C) in the first direction.

21. The electrode assembly according to any one of the preceding claims, further comprising:

a positive electrode current collecting plate (51), located on sides of the multiple positive electrode tabs (20) away from the body portion (100) and fixedly connected to the flattened multiple positive electrode tabs (20) by welding; and

a negative electrode current collecting plate (52), located on sides of the multiple negative electrode tabs (30) away from the body portion (100) and fixedly connected to the flattened multiple negative electrode tabs (30) by welding;

wherein the multiple positive electrode tabs (20) are bent and flattened at a root portion of the at least one first notch (22) towards a center of an end portion of the body portion (100), the multiple negative electrode tabs (30) are bent and flattened at a root portion of the at least one second notch (32) towards the center of the end portion of the body portion (100), a first distance d1 between the root portion of the at least one first notch (22) and the separator (10C) in the first direction is greater than or equal to 1.5 times a thickness t1 of the positive electrode current collecting plate (51), and a second distance d2 between the root portion of the at least one second notch (32) and the separator (10C) in the first direction is greater than or equal to 1.5 times a thickness t2 of the negative electrode current collecting plate (52).

22. The electrode assembly according to any one of the preceding claims, wherein the root portion of the first notch (22) between adjacent positive electrode tab segments (21) and the root portion of the second notch (32) between adjacent negative electrode tab segments (31) are located in a same plane perpendicular to the first direction.

23. The electrode assembly according to any one of the preceding claims, further comprising:

an insulating member (40), which is disposed at the end portion of the body portion (100) connected to the multiple positive electrode tabs (20) and the multiple negative electrode tabs (30) and is located between the multiple positive electrode tabs (20) and the multiple negative electrode tabs (30),

wherein in the first direction, a distance between the root portion of the at least one first notch (22) and the second side edge (17) is a third distance d3, a distance between the root portion of the at least one second notch (32) and the second side edge (17) is a fourth distance d4, the insulating member (40) is located before the second side edge (17), a distance between a foremost end of the insulating member (40) along the first direction and the second side edge (17) is a fifth distance d5, and a distance between a foremost end of an extension part of the positive electrode active substance film layer (12) on the multiple positive electrode tabs (20) and the second side edge (17) is a sixth distance d6, wherein the third distance d3, the fourth distance d4, the fifth distance d5, and the sixth distance d6 satisfy: d5<d6, d3<d5, and d4<d5.

24. A battery cell, comprising the electrode assembly according to any one of the preceding claims.

25. A battery, comprising the battery cell according to claim 24.

26. An electric apparatus, comprising the battery according to claim 25.

27. A manufacturing method of an electrode assembly, comprising:

providing a separator (10C), a positive electrode plate (10A) connected with a full positive electrode tab, and a negative electrode plate (10B) connected with a full negative electrode tab;

die-cutting the full positive electrode tab into multiple positive electrode tabs (20) spaced apart in a length direction of the positive electrode plate (10A), and die-cutting the full negative electrode tab into multiple negative electrode tabs (30) spaced apart in a length direction of the negative electrode plate (10B);

winding the positive electrode plate (10A), the separator (10C), and the negative electrode plate (10B) together to form a body portion (100) of the electrode assembly, and positioning the multiple positive electrode tabs (20) and the multiple negative electrode tabs (30) at a same end portion of the body portion (100) in a direction perpendicular to a winding direction (r) of the body portion (100); and

bending and flattening the multiple positive electrode tabs (20) and the multiple negative electrode tabs (30); wherein during the die-cutting of the full positive electrode tab and the full negative electrode tab, lengths of the positive electrode tabs (20) connected to respective positive electrode plate winding layers of the body portion (100) in the winding direction (r) are increased along the winding direction (r), and lengths of the negative electrode tabs (30) connected to respective negative electrode plate winding layers of the body portion (100) in the winding direction (r) are increased along the winding direction (r).

28. The manufacturing method according to claim 27, further comprising:
fixing an insulating member (40) between the multiple positive electrode tabs (20) and the multiple negative electrode tabs (30) so that a tab group formed by overlapping of the multiple positive electrode tabs (20) and a tab group formed by overlapping of the multiple negative electrode tabs (30) are isolated via the insulating member (40).

29. The manufacturing method according to any one of the preceding claims, further comprising:
welding a positive electrode current collecting plate (51) to the flattened multiple positive electrode tabs (20), and welding a negative electrode current collecting plate (52) to the flattened multiple negative electrode tabs (30).

30. The manufacturing method according to any one of the preceding claims, wherein during the die-cutting of the multiple positive electrode tabs (20), at least one first notch (22) is made by die-cutting at an edge of a side of at least one of the multiple positive electrode tabs (20) away from the positive electrode plate (10A), so as to divide the positive electrode tab (20) into multiple positive electrode tab segments (21) along the winding direction (r) by the at least one first notch (22); and/or
during the die-cutting of the multiple negative electrode tabs (30), at least one second notch (32) is made by die-cutting at an edge of a side of at least one of the multiple negative electrode tabs (30) away from the negative electrode plate (10B), so as to divide the negative electrode tab (30) into multiple negative electrode tab segments (31) along the winding direction (r) by the at least one second notch (32).

70

60

FIG. 1

60

62

61

10

FIG. 2

100

10B
10A
10C

r

FIG. 3

10A

20

20

b1   b1   b1   b1   b1

FIG. 4

10B

30

30

b2   b2   b2   b2   b2

L

FIG. 5

20  40  30

ax  100

FIG. 6

20  30

D2

41  40

FIG. 7

FIG. 8

FIG. 9

FIG. 10

FIG. 11

r

S1

θ1

20

S2

41

40

S4

θ2

S3

30

FIG. 12

33
151
153
17
18
15
10B
14
13
10C

30
31 32 31

d1

a

23
121
18
16

20
21 22 21

d2

12
11

10A

FIG. 13

FIG. 14

FIG. 15

Provide a separator, a positive electrode plate connected with a full positive electrode tab, and a negative electrode plate connected with a full negative electrode tab ⌇ S1

Die-cut the full positive electrode tab into multiple positive electrode tabs spaced apart in a length direction of the positive electrode plate, and die-cut the full negative electrode tab into multiple negative electrode tabs spaced apart in a length direction of the negative electrode plate ⌇ S2

Wind the positive electrode plate, the separator, and the negative electrode plate together to form a body portion of an electrode assembly, and position the multiple positive electrode tabs and the multiple negative electrode tabs at a same end portion of the body portion in a direction perpendicular to a winding direction of the body portion ⌇ S3

Bend and flatten the multiple positive electrode tabs and the multiple negative electrode tabs ⌇ S4

Weld a positive electrode current collecting plate to the flattened multiple positive electrode tabs, and weld a negative electrode current collecting plate to the flattened multiple negative electrode tabs ⌇ S5

FIG. 16

## INTERNATIONAL SEARCH REPORT

| International application No. |
| --- |
| **PCT/CN2022/089733** |

**A.    CLASSIFICATION OF SUBJECT MATTER**

H01M 50/538(2021.01)i;  H01M 50/55(2021.01)n;  H01M 10/0525(2010.01)n;  H01M 10/04(2006.01)n

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 电池, 单体, 电芯, 极耳, 引线, 端子, 接线, 卷绕, 卷芯, 宽度, 增加, 变宽, 加宽, battery, cell, core, wind, coil, ear, electrode, lug, lead, terminal, wiring, width, increase, widen

**C.    DOCUMENTS CONSIDERED TO BE RELEVANT**

| Category* | Citation of document, with indication, where appropriate, of the relevant passages | Relevant to claim No. |
| --- | --- | --- |
| X | CN 103620824 A (NIPPON CHEMI-CON CORPORATION) 05 March 2014 (2014-03-05) description, paragraphs 152-180, and figures 10-20 | 1-15, 20-22, 24-30 |
| Y | CN 103620824 A (NIPPON CHEMI-CON CORPORATION) 05 March 2014 (2014-03-05) description, paragraphs 152-180, and figures 10-20 | 16-19, 23 |
| Y | CN 216120370 U (XIAMEN HAICHEN NEW ENERGY TECHNOLOGY CO., LTD.) 22 March 2022 (2022-03-22) description, paragraphs 37-71, and figures 1-8 | 16-19, 23 |
| X | JP 2004178832 A (SHIN-KOBE ELECTRIC MACHINERY CO., LTD.) 24 June 2004 (2004-06-24) description, paragraphs 3-20, and figures 1-4 | 1-15, 20-22, 24-30 |
| X | CN 1354531 A (JAPAN STORAGE BATTERY CO., LTD.) 19 June 2002 (2002-06-19) description, p. 4, line 25 to p. 8, line 5, and figures 1-8 | 1-3, 6-15, 24-29 |
| X | JP 0822818 A (MATSUSHITA DENKI SANGYO K. K.) 23 January 1996 (1996-01-23) description, paragraphs 10-16, and figures 1-4 | 1-3, 6-15, 24-29 |
| X | CN 207765536 U (SHANGHAI RUIPUQING INNOVATION ENERGY CO., LTD. et al.) 24 August 2018 (2018-08-24) description, paragraphs 3-53, and figures 1-2 | 1, 3, 10, 11, 24-27 |

☑ Further documents are listed in the continuation of Box C.        ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 November 2022** | **28 November 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/089733** |

### C.  DOCUMENTS CONSIDERED TO BE RELEVANT

| Category* | Citation of document, with indication, where appropriate, of the relevant passages | Relevant to claim No. |
| --- | --- | --- |
| X | CN 102569721 A (ZHEJIANG XINGHAI ENERGY TECHNOLOGY CO., LTD.) 11 July 2012 (2012-07-11) <br> description, paragraphs 20-24, and figures 1-5 | 1, 3, 10, 11, 24-27 |
| A | CN 205319259 U (CHEN PEI) 15 June 2016 (2016-06-15) <br> entire document | 1-30 |
| A | KR 20040089260 A (NESSCAP CO., LTD.) 21 October 2004 (2004-10-21) <br> entire document | 1-30 |

Form PCT/ISA/210 (second sheet) (January 2015)

**INTERNATIONAL SEARCH REPORT**
Information on patent family members

International application No.

**PCT/CN2022/089733**

| Patent document cited in search report | | | Publication date (day/month/year) | Patent family member(s) | | | Publication date (day/month/year) |
|---|---|---|---|---|---|---|---|
| CN | 103620824 | A | 05 March 2014 | US | 2014113185 | A1 | 24 April 2014 |
| | | | | KR | 20140047091 | A | 21 April 2014 |
| | | | | EP | 2728647 | A1 | 07 May 2014 |
| | | | | WO | 2013001821 | A1 | 03 January 2013 |
| | | | | JP | WO2013001821 | A1 | 23 February 2015 |
| | | | | JP | 2017063044 | A | 30 March 2017 |
| CN | 216120370 | U | 22 March 2022 | | None | | |
| JP | 2004178832 | A | 24 June 2004 | | None | | |
| CN | 1354531 | A | 19 June 2002 | JP | 2002157991 | A | 31 May 2002 |
| | | | | US | 2002061435 | A1 | 23 May 2002 |
| | | | | EP | 1207565 | A2 | 22 May 2002 |
| JP | 0822818 | A | 23 January 1996 | | None | | |
| CN | 207765536 | U | 24 August 2018 | WO | 2020015362 | A1 | 23 January 2020 |
| | | | | EP | 3694043 | A1 | 12 August 2020 |
| | | | | JP | 2021500734 | A | 07 January 2021 |
| | | | | KR | 20210031849 | A | 23 March 2021 |
| | | | | US | 2021376427 | A1 | 02 December 2021 |
| CN | 102569721 | A | 11 July 2012 | | None | | |
| CN | 205319259 | U | 15 June 2016 | | None | | |
| KR | 20040089260 | A | 21 October 2004 | | None | | |

Form PCT/ISA/210 (patent family annex) (January 2015)